# EUROPEAN PATENT APPLICATION

(11) **EP 4 629 675 A1**
(43) Date of publication of application: **08.10.2025**
(21) Application number: 23910393.0
(22) Date of filing: 22.12.2023
(51) Int. Cl.: H04W 12/041

(54) **COMMUNICATION METHOD AND RELATED APPARATUS**

(30) Priority: 29.12.2022 CN 202211728331
(71) Applicant: Huawei Technologies Co., Ltd., Shenzhen, Guangdong 518129 (CN)
(72) Inventor: ZHANG, Zheng, Shenzhen, Guangdong 518129 (CN); ZHENG, Xiaochun, Shenzhen, Guangdong 518129 (CN); LI, Fei, Shenzhen, Guangdong 518129 (CN)
(74) Representative: Gill Jennings & Every LLP
(86) International application number: PCT/CN2023/140997
(87) International publication number: WO 2024/140467

(57) **Abstract**

A communication method and a related apparatus are provided. The method is applicable to a first device. The method includes: obtaining security information of a first tag and one or more operation command security policies of the first tag, where the security information is security information that has been executed, and includes a first authentication policy and/or a first security policy; receiving a first operation command from an application function entity AF; determining a second authentication policy and/or a second security policy of the first tag based on the security information and a first operation command security policy included in the one or more operation command security policies, where the first operation command security policy corresponds to the first operation command; and sending a first command to a second device, where the first command includes the second authentication policy and/or the second security policy, and a tag identifier of the first tag. According to embodiments of this application, complexity of an authentication process can be reduced.

## Description

This application claims priority to Chinese Patent Application No. 202211728331.8, filed with the China National Intellectual Property Administration on December 29, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Radio frequency identification (radio frequency identification, RFID) tags (also referred to as electronic tags) are a type of contactless automatic identification technology, which performs contactless bidirectional data communication in a radio frequency manner, and reads and writes a tag (TAG), so as to complete data communication between a reader and a tag, and identify a target and exchange data.

It is expected that, in the 3rd generation partnership project (3rd generation partner project, 3GPP) release (release, R) 19 phase, functions of an RFID reader will be integrated into a base station, and a passive internet of things terminal (such as an RFID tag) will be connected to a 5th generation (5th generation, 5G) core network to implement large-scale deployment and application of passive internet of things. Because a distance between the base station and the tag is longer than that between the reader and the tag, the base station and the tag are vulnerable to man-in-the-middle attacks. Therefore, compared with an original RFID authentication technology, the passive internet of things connected to the 5G core network requires stronger security assurance, including capabilities such as identity authentication, confidentiality protection, and integrity protection.

Currently, for security purposes, the tag performs an authentication process on some operation commands according to an authentication policy corresponding to the operation commands in tag subscription information. However, this authentication manner is redundant and highly complex.

### SUMMARY

This application provides a communication method and a related apparatus, to reduce complexity of an authentication process.

According to a first aspect, this application provides a communication method. The method is applied to a first device, and the method includes:
obtaining security information of a first tag and one or more operation command security policies of the first tag, where the security information is security information that has been executed, and includes a first authentication policy and/or a first security policy,
receiving a first operation command from an application function entity AF;
determining a second authentication policy and/or a second security policy of the first tag based on the security information and a first operation command security policy included in the one or more operation command security policies, where the first operation command security policy corresponds to the first operation command; and
sending a first command to a second device, where the first command includes the second authentication policy and/or the second security policy, and a tag identifier of the first tag.

In this embodiment of this application, the first authentication policy and/or the first security policy included in the security information of the first tag may be understood as an authentication policy and/or a security policy that have/has been executed. The first device determines the second authentication policy and/or the second security policy of the first tag based on the obtained security information of the first tag and the first operation command security policy corresponding to the first operation command. Compared with a solution in the conventional technology in which the second authentication policy is determined based only on the first operation command security policy, this embodiment of this application further considers the executed authentication policy, so as to determine the second authentication policy that can reduce complexity of a security authentication process. If authentication is performed based on the second authentication policy determined in the conventional technology, an authentication policy (that is, the first authentication policy) that has been executed is usually repeatedly executed, which makes an authentication process complex and redundant. In the solution of this application, the second security policy may be further determined, that is, processing may be performed based on the second security policy in a data transmission process. Therefore, data transmission security can be further ensured.

For determining the second authentication policy in the solution of this application, for example, when the first authentication policy is unidirectional authentication of a network on a tag, after the unidirectional authentication of the network on the tag is performed, the solution in the conventional technology is used. In some cases, the second authentication policy is determined as bidirectional authentication based on the operation command security policy, that is, the bidirectional authentication is performed after the unidirectional authentication, where the bidirectional authentication includes the unidirectional authentication. Therefore, redundancy exists, and a process is more complex. According to the solution of this application, when the first authentication policy is unidirectional authentication of the network on the tag, the first authentication policy that has been executed is considered when the second authentication policy is determined. Therefore, the determined second authentication policy may include unidirectional authentication of the tag on the network, thereby reducing an interaction procedure and a communication amount, and avoiding redundancy.

According to a second aspect, this application provides a communication method. The method is applied to a first device, and the method includes:
obtaining security information of a first tag and one or more operation command security policies of the first tag, where the security information is security information that has been executed, and includes a first authentication policy and/or a first security policy;
receiving a first operation command from an application function entity AF, where the first operation command corresponds to a first operation command security policy in the one or more operation command security policies, and
when the security information meets the first operation command security policy, sending the first operation command to the first tag, or executing, by the first tag, the first operation command; or
when the security information does not meet the first operation command security policy corresponding to the first operation command, determining a second authentication policy and/or a second security policy of the first tag based on the security information and the first operation command security policy, and sending a first command to a second device, where the first command includes the second authentication policy and/or the second security policy and a tag identifier of the first tag.

In this embodiment of this application, the first authentication policy and/or the first security policy included in the security information of the first tag may be understood as an authentication policy and/or a security policy that have/has been executed. Compared with a solution in the conventional technology in which the second authentication policy is determined based only on the first operation command security policy, this embodiment of this application considers whether the security information meets the first operation command security policy. When the security information meets the first operation command security policy, the first tag may directly execute the first operation command, thereby reducing complexity of an authentication process. When the security information does not meet the first operation command security policy, the first device determines the second authentication policy and/or the second security policy of the first tag based on the obtained security information of the first tag and the first operation command security policy corresponding to the first operation command, and considers the executed authentication policy when determining the second authentication policy, so as to determine the second authentication policy that can reduce complexity of the security authentication process. If authentication is performed based on the second authentication policy determined in the conventional technology, an authentication policy (that is, the first authentication policy) that has been executed is usually repeatedly executed, which makes an authentication process complex and redundant. In addition, in the solution of this application, when the security information does not meet the first operation command security policy, the second security policy may be further determined, that is, processing may be performed based on the second security policy in a data transmission process. Therefore, data transmission security can be further ensured.

For determining the second authentication policy in the solution of this application, for example, when the first authentication policy is unidirectional authentication of a network on a tag, after the unidirectional authentication of the network on the tag is performed, if a plurality of operation commands need to be executed, the solution in the conventional technology is used. In some cases, unidirectional authentication is performed multiple times based on security policies corresponding to these operation commands. Therefore, redundancy exists, and a process is more complex. According to the solution of this application, when the first authentication policy is unidirectional authentication of the network on the tag, the executed first authentication policy is considered. For example, when the security information meets the first operation command security policy, for example, the first operation command security policy is the unidirectional authentication of the network on the tag, the second authentication policy does not need to be determined, and the unidirectional authentication does not need to be performed, but the first tag directly executes the operation command. When the security information does not meet the first operation command security policy, for example, the first operation command security policy is bidirectional authentication, the second authentication policy needs to be determined, and the executed first authentication policy is considered when the second authentication policy is determined. Therefore, the determined second authentication policy may include unidirectional authentication of the tag on the network, instead of bidirectional authentication, thereby reducing an interaction procedure and a communication amount, and avoiding redundancy.

In a possible implementation, the first authentication policy is an authentication policy executed before the first operation command is received, and the first security policy is a security policy executed before the first operation command is received.

In a possible implementation, the first authentication policy includes an authentication policy during registration of the first tag from the second device, or the first authentication policy includes the authentication policy during registration and an authentication policy determined for a second operation command before the first operation command.

In a possible implementation, the first security policy is determined based on subscription information of the first tag and a security policy expected by the AF, or the first security policy includes a security policy determined for the second operation command before the first operation command.

In this implementation, the AF may further deliver the expected security policy. This manner of delivering the expected security policy is more flexible, can better meet an actual requirement, and is more applicable.

In a possible implementation, the first operation command security policy includes an authentication policy corresponding to the first operation command and/or a security policy corresponding to the first operation command.

In a possible implementation, after sending the first command to the second device, the method further includes:
receiving a first authentication result message from the second device;
updating the security information of the first tag based on the first authentication result message; and
sending the first operation command to the first tag when updated security information meets the first operation command security policy, or sending a first operation command response of the first operation command to the AF when updated security information does not meet the first operation command security policy.

In this implementation, when the first device is a TMF or an AMF, the first device may send the first operation command to the first tag based on the updated security information, or send the first operation command response of the first operation command to the AF based on the updated security information. Optionally, when the first device is the first tag, the first device may send the first operation command response of the first operation command to the AF based on the updated security information. That is, a security check used to trigger the security information and the first operation command security policy may be a TMF or an AMF, or may be the first tag, so that the solution is implemented in more diversified manners and is more applicable.

In a possible implementation, updating the security information of the first tag based on the first authentication result message includes:
when an authentication result in the first authentication result message is authentication success, and the first authentication policy is inconsistent with at least one of the second authentication policy and an authentication policy in historically recorded security information of the first tag, updating the first authentication policy and updating the first security policy to the second security policy based on the second authentication policy and the authentication policy in the historically recorded security information of the first tag.

In a possible implementation, the method further includes:
receiving a service request from the AF, where the service request includes the security policy expected by the AF;
receiving a registration request from the first tag, where the registration request includes the tag identifier of the first tag;
sending a second command to the second device, where the second command includes the tag identifier of the first tag and the security policy expected by the AF;
receiving a response message corresponding to the second command from the second device, where the response message includes the first authentication policy; and
receiving a second authentication result message from the second device, where the second authentication result message includes one or more of the one or more operation command security policies, the first security policy, and a key.

In this implementation, the first device is a TMF or an AMF. Existing signaling is extended to carry more information (for example, the service request carries the security policy expected by the AF; for another example, the second command carries the security policy expected by the AF; for another example, the response message corresponding to the second command carries the first authentication policy; for another example, the second authentication result message includes the first security policy and/or the one or more operation command security policies), which facilitates forward compatibility of a protocol and is more applicable.

In a possible implementation, the method further includes:
sending a registration accept notification of the registration request to the first tag, where the registration accept notification includes the first security policy, and the first security policy is used to generate the key.

In this implementation, the first device is a TMF or an AMF. The TMF or the AMF may notify, by adding the first security policy to the registration accept notification, the first tag of the security policy that has taken effect, so that the first tag can subsequently generate the corresponding key based on the first security policy.

In a possible implementation, the first device is a tag management function TMF or an access and mobility management function AMF.

In a possible implementation, the security information includes the first security policy, and obtaining the security information of the first tag includes:
sending a registration request to a TMF or an AMF, where the registration request includes the tag identifier of the first tag; and
receiving a registration accept notification of the registration request from the TMF or the AMF, where the registration accept notification includes the first security policy; and
the method further includes:
   generating a key based on the first security policy.

In this implementation, the first device is the first tag. The first tag receives the first security policy carried in the registration accept notification, so that the first tag can generate the corresponding key based on the first security policy.

In a possible implementation, the first device is the first tag.

In a possible implementation, the first security policy, the second security policy, the security policy expected by the AF, and/or the security policy corresponding to the first operation command include/includes an access stratum security policy and/or an application layer security policy.

According to a third aspect, this application provides a communication method. The method is applied to a second device, and the method includes:
sending one or more of a first authentication policy, a first security policy, and a key to a first device; and
receiving a first command from the first device, where the first command includes a second authentication policy and/or a second security policy, and a tag identifier of a first tag, and the second authentication policy and/or the second security policy are/is related to the first authentication policy and/or the first security policy and a first operation command security policy corresponding to a first operation command.

It may be understood that the second device may be specifically an AAA or a UDM.

In a possible implementation, the method further includes:
sending the key and/or an application layer security policy included in the first security policy to an application function entity AF.

In this implementation, the first device sends the application layer security policy included in the first security policy to the AF. Therefore, the AF may subsequently determine, by using the received application layer security policy, which security policies between the AF and the first tag are effective.

In a possible implementation, the first authentication policy is an authentication policy executed before the first device receives the first operation command, and the first security policy is a security policy executed before the first device receives the first operation command.

In a possible implementation, the first authentication policy includes an authentication policy during registration of the first tag, or the first authentication policy includes the authentication policy during registration and an authentication policy determined for a second operation command before the first operation command.

In a possible implementation, the first security policy is determined based on subscription information of the first tag and a security policy expected by the AF, or the first security policy includes a security policy determined for the second operation command before the first operation command.

In a possible implementation, the method further includes:
receiving a second command from the first device, where the second command includes the tag identifier of the first tag and the security policy expected by the AF.

In a possible implementation, sending the first authentication policy to the first device includes:
sending a response message corresponding to the second command to the first device, where the response message includes the first authentication policy.

In a possible implementation, sending the first security policy to the first device includes:
sending a second authentication result message to the first device, where the second message includes the first security policy.

In a possible implementation, the second message further includes one or more operation command security policies and/or the key, and the one or more operation command security policies include the first operation command security policy corresponding to the first operation command.

In a possible implementation, the first security policy, the second security policy, and/or the security policy expected by the AF include/includes an access stratum security policy and/or an application layer security policy.

According to a fourth aspect, this application provides a communication apparatus. The apparatus is a first device, and the apparatus includes:
a processing unit, configured to obtain security information of a first tag and one or more operation command security policies of the first tag, where the security information is security information that has been executed, and includes a first authentication policy and/or a first security policy, and
a transceiver unit, configured to receive a first operation command from an application function entity AF, where
the processing unit is further configured to determine a second authentication policy and/or a second security policy of the first tag based on the security information and a first operation command security policy included in the one or more operation command security policies, where the first operation command security policy corresponds to the first operation command; and
the transceiver unit is further configured to send a first command to a second device, where the first command includes the second authentication policy and/or the second security policy, and a tag identifier of the first tag.

It may be understood that the transceiver unit may further perform an operation such as receiving data or sending data in the first aspect, and the processing unit is further configured to perform an operation such as processing data in the first aspect.

According to a fifth aspect, this application provides a communication apparatus. The apparatus is a first device, and the apparatus includes:
a processing unit, configured to obtain security information of a first tag and one or more operation command security policies of the first tag, where the security information is security information that has been executed, and includes a first authentication policy and/or a first security policy; and
a transceiver unit, configured to receive a first operation command from an application function entity AF, where the first operation command corresponds to a first operation command security policy in the one or more operation command security policies; and
the processing unit is further configured to: when the security information meets the first operation command security policy, send the first operation command to the first tag by using the transceiver unit, or execute, by the first tag, the first operation command; or
the processing unit is further configured to: when the security information does not meet the first operation command security policy corresponding to the first operation command, determine a second authentication policy and/or a second security policy of the first tag based on the security information and the first operation command security policy, and send a first command to a second device by using the transceiver unit, where the first command includes the second authentication policy and/or the second security policy and a tag identifier of the first tag.

It may be understood that the transceiver unit may further perform an operation such as receiving data or sending data in the second aspect, and the processing unit is further configured to perform an operation such as processing data in the second aspect.

According to a sixth aspect, this application provides a communication apparatus. The apparatus is a second device, and the apparatus includes:
a processing unit, configured to determine one or more of a first authentication policy, a first security policy, and a key; and
a transceiver unit, configured to send one or more of the first authentication policy, the first security policy, and the key to a first device, where
the transceiver unit is further configured to receive a first command from the first device, where the first command includes a second authentication policy and/or a second security policy, and a tag identifier of a first tag, and the second authentication policy and/or the second security policy are/is related to the first authentication policy and/or the first security policy and a first operation command security policy corresponding to a first operation command.

It may be understood that the transceiver unit may further perform an operation such as receiving data or sending data in the third aspect, and the processing unit is further configured to perform an operation such as processing data in the third aspect.

According to a seventh aspect, this application provides a communication apparatus. The communication apparatus may be a first device, and includes a processor, a transceiver, and a memory. The processor and the transceiver are coupled to the memory. The memory stores a computer program. The processor and the transceiver are configured to invoke the computer program in the memory, to enable the communication apparatus to perform the method in any one of the first aspect or the second aspect.

In a possible design, the communication apparatus may be a chip or a device including the chip implementing the method in the first aspect or the second aspect.

According to an eighth aspect, this application provides a communication apparatus. The communication apparatus may be a second device, and includes a processor, a transceiver, and a memory. The processor and the transceiver are coupled to the memory. The memory stores a computer program. The processor and the transceiver are configured to invoke the computer program in the memory, to enable the communication apparatus to perform the method in the third aspect.

In a possible design, the communication apparatus may be a chip or a device including the chip implementing the method in the third aspect.

According to a ninth aspect, this application provides a communication apparatus. The communication apparatus may be a first device, and includes a processor and an interface circuit. The interface circuit is configured to: receive a signal from a communication apparatus other than the communication apparatus and transmit the signal to the processor, or send a signal from the processor to a communication apparatus other than the communication apparatus; and the processor is configured to implement the method in any one of the first aspect or the second aspect through a logic circuit or by executing code instructions.

According to a tenth aspect, this application provides a communication apparatus. The communication apparatus may be a second device, and includes a processor and an interface circuit. The interface circuit is configured to: receive a signal from a communication apparatus other than the communication apparatus and transmit the signal to the processor, or send a signal from the processor to a communication apparatus other than the communication apparatus; and the processor is configured to implement the method in the third aspect through a logic circuit or by executing code instructions.

According to an eleventh aspect, this application provides a computer-readable storage medium. The storage medium stores a computer program or instructions. When the computer program or the instructions are executed by a computer, the method in any one of the first aspect or the second aspect is implemented.

According to a twelfth aspect, this application provides a computer-readable storage medium. The storage medium stores a computer program or instructions. When the computer program or the instructions are executed by a computer, the method in the third aspect is implemented.

According to a thirteenth aspect, this application provides a computer program product. When a computer reads and executes the computer program product, the computer is enabled to perform the method in any one of the first aspect or the second aspect.

According to a fourteenth aspect, this application provides a computer program product. When a computer reads and executes the computer program product, the computer is enabled to perform the method in the third aspect.

According to a fifteenth aspect, this application provides a communication system. The communication system includes the first device in the fourth aspect, the fifth aspect, the seventh aspect, or the ninth aspect, and the second device in the sixth aspect, the eighth aspect, or the tenth aspect.

### BRIEF DESCRIPTION OF DRAWINGS

FIG. 1a is a diagram of a network architecture of a communication system;
FIG. 1b is a diagram of an architecture of another communication system;
FIG. 2 is a diagram of a passive internet of things security process;
FIG. 3 is a schematic flowchart of a communication method according to an embodiment of this application;
FIG. 4A to FIG. 4C are a diagram of a scenario of a TMF-trigged check for security information and an operation command according to an embodiment of this application;
FIG. 5 is another schematic flowchart of a communication method according to an embodiment of this application;
FIG. 6A and FIG. 6B are a diagram of a scenario of a first tag-trigged check for security information and an operation command according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of another communication apparatus according to an embodiment of this application.

### DESCRIPTION OF EMBODIMENTS

The following further describes specific embodiments of this application in detail with reference to accompanying drawings.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, a system evolved after 5G such as a 6th generation (6th generation, 6G) system, and a wireless local area network (Wireless Local Area Network, WLAN). This is not limited herein.

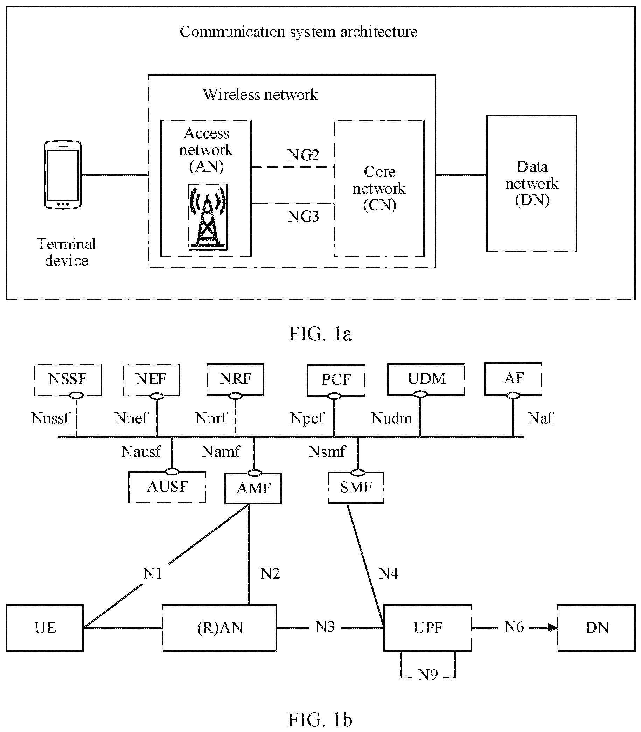

FIG. 1a is a diagram of an architecture of a communication system. As shown in FIG. 1a, a terminal device may access a wireless network, to obtain a service of an external network (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to connect the terminal device to the wireless network, and the CN is configured to manage the terminal device and provide a gateway for communicating with the DN. The following separately describes the terminal device, the RAN, the CN, and the DN in the system architecture in FIG. 1a in detail.

### 1. Terminal device

The terminal device includes a device that provides voice and/or data connectivity for a user. For example, the terminal device is a device that has a wireless transceiver function, and may be deployed on land, including an indoor, outdoor, handheld, wearable, or vehicle-mounted device; may be deployed on water (for example, on a ship); or may be deployed in the air (for example, on an airplane, a balloon, or a satellite). The terminal device may be an electronic tag or a tag (tag), a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### 2. RAN

The RAN may include one or more RAN devices (or access network devices), and an interface between the access network device and the terminal device may be a Uu interface (or referred to as an air interface). Certainly, in communication evolved after 5G, names of these interfaces may remain unchanged, or may be replaced with other names. This is not limited in this application.

The access network device is a node or a device that connects the terminal device to the wireless network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmission reception point (transmission reception point, TRP), a transmission point (transmission point, TP), a mobile switching center, or a device that functions as a base station in device-to-device (Device-to-Device, D2D), vehicle-to-everything (vehicle-to-everything, V2X), machine-to-machine (machine-to-machine, M2M) communication; or may include a central unit (central unit, CU) and a distributed unit (distributed unit, DU) in a cloud access network (cloud radio access network, C-RAN) system, a network device in a non-terrestrial network (non-terrestrial network, NTN) communication system, that is, may be deployed on a high-altitude platform, a satellite, or the like. This is not specifically limited in embodiments of this application.

### 3. CN

The CN may include one or more CN devices (which may also be understood as a network element device, a functional network element, a logical network element, a network element, or an entity).

FIG. 1b is a diagram of an architecture of another communication system. The communication system is a system architecture in a 5G non-roaming scenario. As shown in FIG. 1b, the communication system includes the following logical network elements: a network slice selection function (network slice selection function, NSSF), a network exposure function (network exposure function, NEF), a network repository function (network function repository function, NRF), a policy control function (policy control function, PCF), a unified data management (unified data management, UDM), an application function (application function, AF), an authentication server function (authentication server function, AUSF), an access and mobility management function (access and mobility management function, AMF), a session management function (session management function, SMF), UE, and a (radio) access network ((radio) access network, (R)AN), a user plane function (user plane function, UPF), and a data network (data network, DN).
1. User plane network element: The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like.
   In the 5G communication system, the user plane network element may be a UPF network element.
2. Authentication server: The authentication server performs security authentication on a user. In the 5G communication system, the authentication server may be an AUSF network element.
3. Mobility management network element: The mobility management network element is mainly configured to perform mobility management, access management, and the like. In the 5G communication system, an access management network element may be an AMF network element, and mainly performs functions such as mobility management and access authentication/authorization. In addition, the AMF network element is further responsible for transmitting a user policy between the terminal and the PCF network element.
4. Session management network element: The session management network element is mainly for session management, assignment and management of an internet protocol (internet protocol, IP) address of the user equipment, selection and control of a user plane function, termination of interfaces toward policy control and charging functions, downlink data notification, and the like.
   In the 5G communication system, the session management network element may be an SMF network element, and completes assignment of an IP address of the terminal, UPF selection, charging and QoS policy control, and the like.
5. Application network element: In the 5G communication system, the application network element may be an AF network element, represents an application function of a third party or an operator, is an interface for obtaining external application data in a 5G network, and is mainly configured to transfer a demand of an application side for a network side.
6. Unified data management network element: The unified data management network element is responsible for management of a user identifier, subscription data, and authentication data, and registration management of a serving network element of the user. In the 5G communication system, the unified data management network element may be a UDM network element.
7. Policy control network element: The policy control network element includes a user subscription data management function, a policy control function, a charging policy control function, quality of service (quality of service, QoS) control, and the like, is configured to: provide a unified policy framework for governing network behavior, provide policy rule information for a control plane function network element (for example, the AMF or SMF network element), and so on.
   In the 5G communication system, the policy control network element may be the PCF.
8. Network repository function network element: The network repository function network element provides a storage function and a selection function of network functional entity information for another core network element. In the 5G communication system, the network element may be an NRF network element.
9. Network exposure network element: In the 5G communication system, the network exposure network element may be a NEF network element, is mainly configured to expose a service and a capability of a 3GPP network function to the AF, and may also enable the AF to provide information for the 3GPP network function.
10. Network slice selection function network element: The network slice selection function network element is responsible for selecting a network slice for the UE. In the 5G communication system, the application network element may be an NSSF network element.

The foregoing function network element may be a network element in a hardware device, a software function running on dedicated hardware, or a virtualization function instantiated on a platform (for example, a cloud platform). One or more services may be obtained through division based on the foregoing function network elements. Further, a service independent of a network function may exist. In this application, an instance of the function network element, an instance of a service included in the function network element, and an instance of the service independent of the network function may all be referred to as service instances.

In addition, although not shown, the CN may further include other possible network elements, such as a tag management function (tag management function, TMF) network element and an authentication, authorization, and accounting (Authentication Authorization and Accounting, AAA) network element. Optionally, the AF and/or the AAA may be independent of the CN. When the AF and the AAA are independent of the CN, the AF and the AAA may access the CN by using the NEF.

It should be learned that, in the 5G communication system, function network elements may have names of the function network elements shown in FIG. 1b. In a communication system evolved after 5G (for example, a 6G communication system), function network elements may still have the names of the function network elements shown in FIG. 1b, or may have other names. For example, in the 5G communication system, the policy control network element may be the PCF. In the communication system evolved after 5G (for example, the 6G communication system), the policy control function may still be the PCF, or may have another name. This is not limited in this application.

### 4. DN

The DN may also be referred to as a packet data network (packet data network, PDN), is a network located outside an operator network, and is mainly responsible for providing a data transmission service for a user, for example, an IP multimedia service (IP multimedia service, IMS) or the internet (internet). The UE accesses the DN by establishing a session (session) between UE-RAN-UPF-DN.

It should be noted that, in FIG. 1b, the network functions and entities may exchange messages through different interfaces. For example, the UE and the AMF entity may interact with each other through an N1 interface, where an exchanged message is referred to as an N1 message. Some interfaces are implemented as service based interfaces. The UE, the RAN device, the UPF entity, and the DN in FIG. 1b may be referred to as network functions and entities on a data plane, and are configured to carry service data. User-layer data traffic may be transmitted by using a PDU session established between the UE and the DN, and passes through two network function entities: the RAN device and the UPF entity. Other network functions and entities may be collectively referred to as network functions and entities on a control plane, are configured to carry signaling messages, and are mainly responsible for functions such as authentication and authorization, registration management, session management, mobility management, and policy control, to ensure reliability and stability of user-layer data traffic transmission.

It should be noted that a first device described in embodiments of this application may be an existing network element such as an AMF, or the first device may be a newly designed network element such as a tag management function (tag management function, TMF). This is not limited herein. Optionally, the first device may alternatively be a tag or the like. This is specifically determined based on an actual scenario, and is not limited herein. A second device described in this embodiment of this application may be an authentication, authorization, and accounting (authentication, authorization, and accounting, AAA), a UDM, or the like. This is not limited herein.

It should be noted that a name of a network element in this application may also be referred to as another name. This is not limited herein. It should be noted that a new network element or a newly designed network element described in this application may be an entirely new network element, may be an extension, update, addition, or the like of a function of an existing network element, or may be a combination, integration, or the like of functions of a plurality of existing network elements. This is not limited herein.

To facilitate understanding of related content in embodiments of this application, the following describes some knowledge needed in the solutions in this application. It should be noted that these explanations are intended to make embodiments of this application easier to understand, but should not be considered as a limitation on the protection scope claimed in this application.

### 1. Subscription information of a tag

The subscription information of the tag may also be referred to as tag subscription information or subscription information, which is information written into the tag when the tag is printed. In addition, there is a same record in the AAA. For example, the subscription information may include one or more of the following information: an electronic product code (electronic product code, EPC), a root key K (also referred to as a shared key K), an authentication policy during registration, a tag capability (whether confidentiality protection is supported, whether integrity protection is supported, a supported confidentiality protection algorithm, and a supported integrity protection algorithm), an operation command security policy, and the like.

### 2. Authentication policy during registration

The authentication policy during registration is an authentication policy executed by a tag and a network during registration. The authentication policy includes unidirectional authentication of the network on the tag, unidirectional authentication of the tag on the network, and bidirectional authentication.

### 3. AF layer security policy

The AF layer security policy is used for security protection for an end-to-end data command between a tag and an AF. A security parameter of the AF layer security policy includes: whether AF layer confidentiality protection is enabled, whether AF layer integrity protection is enabled, an AF layer confidentiality protection algorithm, and an AF layer integrity protection algorithm.

### 4. Non-access stratum (non-access stratum, NAS) layer security policy

The non-access stratum layer security policy is used for security protection for an end-to-end data command between a tag and a first device (TMF or AMF). A security parameter of the NAS layer security policy includes: whether NAS layer confidentiality protection is enabled, whether NAS layer integrity protection is enabled, a NAS layer confidentiality protection algorithm, and a NAS layer integrity protection algorithm.

### 5. Operation command security policy

Execution of the operation command corresponds to a required security policy. The operation command security policy includes an authentication policy corresponding to the operation command, an AF layer security policy corresponding to the operation command, and a NAS layer security policy corresponding to the operation command.

### 6. Security information

The security information is locally recorded current security information. For example, the security information may include one or more of an authentication policy during registration, an authentication policy corresponding to an operation command, an AF layer security policy, and a NAS layer security policy.

It should be noted that RFID is a type of contactless automatic identification technology, which performs contactless bidirectional data communication in a radio frequency manner, and reads and writes an electronic tag (tag for short), so as to complete data communication between a reader (or referred to as a reader) and a tag, and identify a target and exchange data.

It is expected that, in the 3GPP R19 phase, functions of an RFID reader will be integrated into a base station, and a passive internet of things terminal (such as a terminal attached with a tag) will be connected to a 5G core network to implement large-scale deployment and application of passive internet of things. Because a distance between the base station and the tag is longer than that between the reader and the tag, the base station and the tag are vulnerable to man-in-the-middle attacks. Therefore, compared with an original RFID authentication technology, the passive internet of things connected to the 5G core network requires stronger security assurance, including capabilities such as identity authentication, confidentiality protection, and integrity protection.

A command for interaction between the reader and the tag include two parts: a random access command and an operation command. The random access command such as select (Select) or query (Query) is used by the reader to select a tag to establish a data communication connection. The operation command such as read (Read), write (Write), or kill (Kill) is used for data exchange between the reader and the tag. The tag implements fixed actions such as uploading data and modifying local data according to an instruction of the operation command. From the perspective of security, the random access command needs to verify an identity of the network or the tag, which is similar to a registration process of UE in a 5GC system. Therefore, the registration request needs to include an authentication process (unidirectional authentication of the network on the tag, unidirectional authentication of the tag on the network, and bidirectional authentication based on a tag capability). Some operation commands involve content such as sensitive data, tag kill, and configuration information modification. Therefore, in addition to authenticating identities of a sender and a receiver of the operation command, confidentiality protection and integrity protection need to be performed on the data.

Currently, for security purposes, the tag performs an authentication process on some operation commands according to an authentication policy corresponding to the operation commands in tag subscription information. However, this authentication manner is redundant and highly complex.

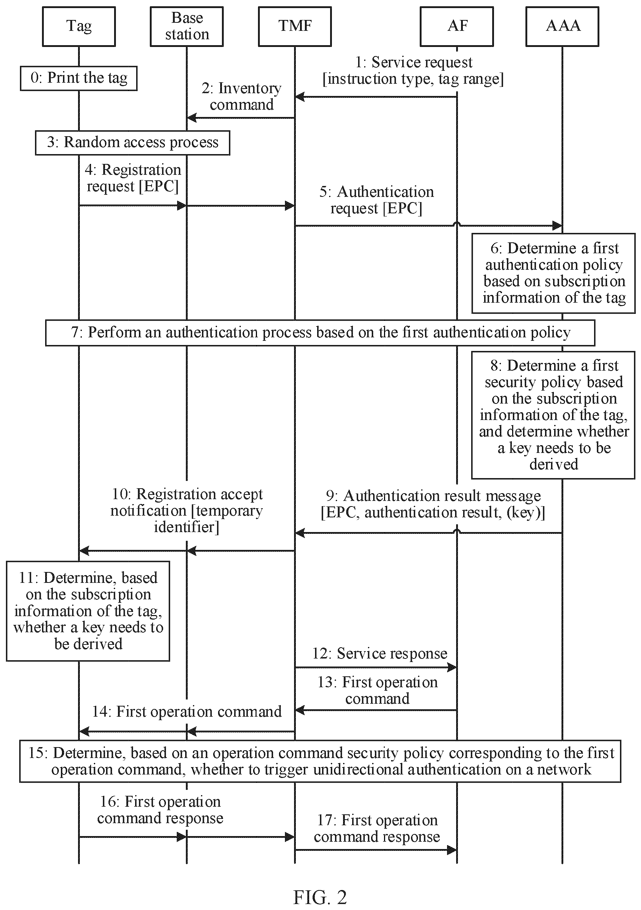

For example, FIG. 2 is a diagram of a passive internet of things security process. As shown in FIG. 2, after a function of a reader is integrated into a base station, a passive internet of things service process is as follows:
Step 0: An enterprise prints a tag and writes the tag into an EPC to identify an attached item, and also writes subscription information of the tag such as a root key K and an authentication policy during registration. The root key K is used to derive a key.
Step 1: An AF (through an NEF or a proxy (proxy)) sends a service request to a TMF, where the service request includes a parameter such as an instruction type or a tag range.
Step 2: The TMF determines an inventory base station based on the parameter in the service request. The TMF sends an inventory command to the inventory base station, where the inventory command includes a parameter such as a range of an inventory tag.
Step 3: The base station and the tag perform a random access process, that is, interact with each other by using a random access instruction, and finally a tag successfully accesses the base station.
Step 4: The tag that successfully accesses the base station sends a registration request to the base station, and the base station sends the registration request to the TMF. The registration request includes a parameter such as an EPC of the tag that successfully accesses the base station.
Step 5: The TMF generates an authentication request based on the registration request, and sends the authentication request (through the NEF or the proxy (proxy)) to an AAA, where the authentication request includes the parameter such as the EPC of the tag that successfully accesses the base station.
Step 6: The AAA determines a first authentication policy based on the subscription information of the tag. Herein, the first authentication policy is an authentication policy during registration.
Step 7: The AAA performs an authentication process based on the first authentication policy and the tag.
Step 8: Optionally, after the authentication succeeds, the AAA determines a first security policy based on the subscription information of the tag, and determines whether a key needs to be derived. If determining that a key needs to be derived, the AAA derives, based on the root key K in the subscription information of the tag, a key corresponding to the first security policy, or if determining that a key does not need to be derived, the AAA does not perform a key derivation process.
Step 9: The AAA sends an authentication result message to the TMF, where the authentication result message includes information such as the EPC of the tag that successfully accesses the base station, an authentication result, and a key (if any) corresponding to a NAS layer. Herein, the authentication result includes an identifier indicating whether the authentication succeeds.
Step 10: The TMF sends a registration accept notification to the tag based on the authentication result message, where the registration accept notification may include information such as a temporary identifier allocated by a network to the tag. It may be understood that, if the authentication result in the authentication result message is that the authentication succeeds, the TMF sends the registration accept notification to the tag.
Step 11: The tag determines, based on the subscription information of the tag, whether a key needs to be derived. If determining that a key needs to be derived, the tag derives, based on the root key K in the subscription information of the tag, a key corresponding to the first security policy, or if determining that a key does not need to be derived, the tag does not perform a key derivation process.
Step 12: If the instruction type in the service request in step 1 indicates that there is a subsequent operation command, the TMF sends a service response to the AF, where the service response includes an EPC of a successfully registered tag.
Step 13: The AF sends a first operation command to the TMF, where the first operation command includes the EPC of the successfully registered tag and a related parameter of the operation command.
Step 14: The TMF sends the first operation command to the tag through the base station.
Step 15: After receiving the first operation command, the tag determines, based on an operation command security policy corresponding to the first operation command, whether to trigger unidirectional authentication on the network. It can be understood that, if the operation command security policy corresponding to the first operation command is that unidirectional authentication on the network is required, the tag and the AAA execute a unidirectional authentication process on the network; or if the operation command security policy corresponding to the first operation command is that unidirectional authentication on the network is not required, the tag and the AAA do not execute a unidirectional authentication process on the network.
   It should be noted that, in the conventional technology, an operation command policy corresponding to an operation command only includes whether unidirectional authentication on a network is required.
Step 16: The tag sends a first operation command response to the TMF through the base station.
Step 17: The TMF sends the first operation command response to the AF.

It should be noted that repeated authentication may exist in the authentication process performed in step 7 and step 15. For example, the first security policy in step 7 is unidirectional authentication on the network, and it is also determined, based on the operation command security policy corresponding to the first operation command, that unidirectional authentication on the network needs to be triggered in step 15. Therefore, the unidirectional authentication on the network is repeated, and the authentication process is redundant and complex.

Based on this, embodiments of this application provide a communication method and a related apparatus, to reduce complexity of an authentication process.

It should be noted that a message (for example, a first authentication result message) in the following embodiments of this application may be a notification or a command, which is specifically determined based on an actual scenario, and is not limited herein.

It should be noted that, in embodiments of this application, data passing through a base station may be understood as transparent transmission/forwarding, and data passing through a TMF may be understood as processed sending. For ease of description, sending is mainly described in embodiments of this application.

The following describes in detail the communication method and the communication apparatus provided in this application.

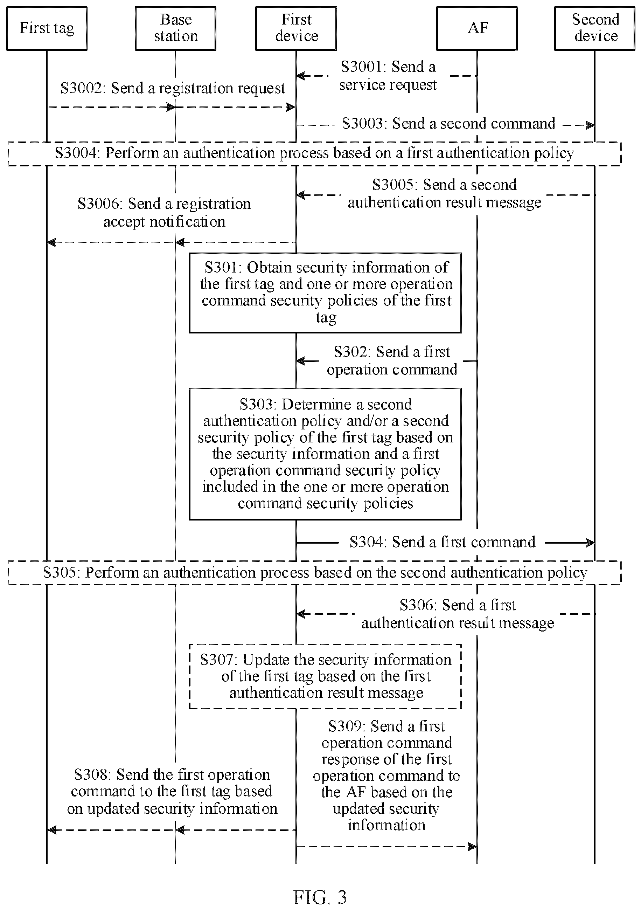

FIG. 3 is a schematic flowchart of a communication method according to an embodiment of this application. As shown in FIG. 3, the communication method includes the following steps S301 to S3005. The method shown in FIG. 3 may be executed by a first device, a second device, and an AF. Alternatively, the method shown in FIG. 3 may be executed by a chip in the first device, a chip in the second device, and a chip in the AF. The first device may be an AMF or a TMF, and the second device may be an AAA, a UDM, or the like. This is not limited herein. It should be noted that FIG. 3 is a schematic flowchart of a method embodiment of this application, and shows detailed communication steps or operations of the method. However, these steps or operations are merely examples. Variants of various operations in FIG. 3 or other operations may be further performed in embodiments of this application. In addition, the steps in FIG. 3 may be separately performed in a sequence different from that shown in FIG. 3, and possibly, not all the operations in FIG. 3 need to be performed. FIG. 3 is described by using an example in which the first device (for example, may be specifically an AMF or a TMF), a first tag having a computing capability, the second device, and the AF are execution bodies of the method.

S301: The first device obtains security information of the first tag and one or more operation command security policies of the first tag.

In some feasible implementations, the security information of the first tag includes a first authentication policy and/or a first security policy. Herein, the first tag is a tag successfully accessed or a tag successfully registered. The first authentication policy is an authentication policy executed before a first operation command is received, and the first security policy is a security policy executed before the first operation command is received.

For example, the first authentication policy includes an authentication policy during registration of the first tag that is sent by the AAA or the UDM, or the first authentication policy includes the authentication policy during registration and an authentication policy determined for a second operation command before the first operation command. The authentication policy during registration of the first tag may be determined based on subscription information of the first tag and an authentication policy expected by the AF.

For example, the first security policy is determined based on the subscription information of the first tag and a security policy expected by the AF, or the first security policy includes a security policy determined for the second operation command before the first operation command. That is, the first authentication policy may be understood as an authentication policy that has been executed, has taken effect, has been activated, or has been successfully enabled, and the first security policy may be understood as a security policy that has been executed, has taken effect, has been activated, or has been successfully enabled. The security policy in this embodiment of this application includes an AF layer security policy and/or a NAS layer security policy.

For example, the security policy (for example, an x^{th} security policy) in this embodiment of this application includes the AF layer security policy and/or the NAS layer security policy. A possible implementation of the security policy is as follows: The security policy may be a 22-bit character string, and meanings represented by bits of the security policy are shown in Table 1:

**Table 1**

| Meaning | NAS layer encryption and integrity protection policy | NAS layer encryption algorithm | NAS layer integrity protection algorithm | AF layer encryption and integrity protection policy | AF layer encryption algorithm | AF layer integrity protection algorithm |
|---|---|---|---|---|---|---|
| Length | 3 bits | 4 bits | 4 bits | 3 bits | 4 bits | 4 bits |
| | 000 No encryption or integrity protection | 0000 Not supported | 0000 Not supported | 000 No encryption or integrity protection | 0000 Not supported | 0000 Not supported |
| | | 0001 Encryption algorithm 1 | 0001 Integrity protection algorithm 2 | | 0001 Encryption algorithm 1 | 0001 Integrity protection algorithm 2 |
| | 001 No encryption but integrity protection | | | 001 No encryption but integrity protection | | |
| | | 0010 Encryption algorithm 2 | 0010 Integrity protection algorithm 2 | | 0010 Encryption algorithm 2 | 0010 Integrity protection algorithm 2 |
| | 010 Encryption and integrity protection | 0011 Encryption algorithm 3 | 0011 Integrity protection algorithm 3 | 010 Encryption and integrity protection | 0011 Encryption algorithm 3 | 0011 Integrity protection algorithm 3 |
| | 011-111 Reserved bits | 0100-1111 Reserved bits | 0100-1111 Reserved bits | 011-111 Reserved bits | 0100-1111 Reserved bits | 0100-1111 Reserved bits |

It may be understood that encryption in this embodiment of this application is short for confidentiality protection, and integrity protection is short for integrity protection.

For example, if the first security policy is 010 0010 0001 000 0000 0000, it indicates that NAS layer confidentiality protection and integrity protection are enabled, and AF layer confidentiality protection and integrity protection are not enabled. The encryption algorithm 2 is used for NAS layer confidentiality protection, and the integrity protection algorithm 1 is used for NAS layer integrity protection.

In this embodiment of this application, the one or more operation command security policies of the first tag may be understood as operation command security policies corresponding to one or more operation commands for the first tag. Generally, one operation command corresponds to one operation command security policy, and operation command security policies corresponding to different operation commands may be the same or may be different. It may be understood that an operation command security policy corresponding to an operation command in this embodiment of this application may generally include an authentication policy corresponding to the operation command and/or a security policy corresponding to the operation command (that is, an AF layer security policy and/or a NAS layer security policy). For example, the operation command may be a read (Read) command, a write (Write) command, a kill (Kill) command, or a lock (Lock) command. This is not limited herein. For example, an operation command security policy corresponding to the read command is that bidirectional authentication is required, and AF layer confidentiality protection and integrity protection and NAS layer confidentiality protection and integrity protection further need to be enabled. An operation command security policy corresponding to the write command is that unidirectional authentication of a tag on a network is required, and AF layer confidentiality protection and integrity protection and NAS layer confidentiality protection and integrity protection further need to be enabled. An operation command security policy corresponding to the kill command is that unidirectional authentication of a tag on a network is required. An operation command security policy corresponding to the lock command is that unidirectional authentication of a tag on a network is required.

For example, an implementation of the one or more operation command security policies in this embodiment of this application may be as follows: Each operation command security policy is a 16-bit character string, and meanings represented by bits of the operation command security policy are shown in Table 2:

**Table 2**

| Meaning | Operation command character corresponding to an operation command | Authentication requirement | NAS security requirement | AF security requirement |
|---|---|---|---|---|
| Length | 8 bits | 2 bits | 3 bits | 3 bits |
| | 11000010 Read command | | | |
| | 11000011 Write command | | | |
| | 11000100 Kill command | | | |
| | 11000101 Lock command | 00 No requirement | 000 No encryption or integrity protection | 000 No encryption or integrity protection |
| | | 01 Unidirectional authentication of a network on a tag | | |
| | 11000110 Access command | | 001 No encryption but integrity protection | 001 No encryption but integrity protection |
| | 11000111 BlockWrite command | | | |
| | | 10 Unidirectional authentication of a tag on a network | | |
| | 11001000 BlockErase command | | 010 Encryption and integrity protection | 010 Encryption and integrity protection |
| | | 11 Bidirectional authentication | 011-111 Reserved bits | 011-111 Reserved bits |
| | 11010010 ReadBuffer command | | | |
| | 11010011 FileOpen command | | | |
| | 11100010 FileList command | | | |

For example, assuming that an operation command security policy is 11000100 11 010 000, it indicates that the operation command is a kill command, and a minimum security requirement for executing the kill command is bidirectional authentication, NAS encryption and integrity protection enabled, and no AF encryption or integrity protection.

S302: The AF sends the first operation command to the first device. Correspondingly, the first device receives the first operation command from the AF.

In some feasible implementations, the first operation command may be any one of the one or more operation commands for the first tag. The first operation command corresponds to a first operation command security policy, and the first operation command security policy includes an authentication policy corresponding to the first operation command and/or a security policy corresponding to the first operation command.

S303: The first device determines a second authentication policy and/or a second security policy of the first tag based on the security information and the first operation command security policy included in the one or more operation command security policies.

In some feasible implementations, the first operation command security policy corresponds to the first operation command. That the first device determines the second authentication policy and/or the second security policy of the first tag based on the security information and the first operation command security policy corresponding to the first operation command included in the one or more operation command security policies may be understood as: The first device determines the second authentication policy based on the first authentication policy and the authentication policy corresponding to the first operation command, and determines the second security policy based on the first security policy and the security policy corresponding to the first operation command. Specifically, determining the second security policy based on the first security policy and the security policy corresponding to the first operation command may be understood as: determining an AF layer security policy in the second security policy based on an AF layer security policy in the first security policy and an AF layer security policy in the security policy corresponding to the first operation command, and/or determining a NAS layer security policy in the second security policy based on a NAS layer security policy in the first security policy and a NAS layer security policy in the security policy corresponding to the first operation command.

For example, it is assumed that the first operation command is a read command, where an operation command security policy corresponding to the read command is that bidirectional authentication is required, and AF layer confidentiality protection and integrity protection and NAS layer confidentiality protection and integrity protection further need to be enabled. It is also assumed that, in the security information of the first tag, the first authentication policy is that unidirectional authentication of the tag on the network is completed/passed, and the first security policy is that AF layer confidentiality protection and integrity protection are enabled. In this case, the second authentication policy determined based on the foregoing information is unidirectional authentication of the network on the tag, and the second security policy determined based on the foregoing information is that NAS layer confidentiality protection and integrity protection are enabled.

S304: The first device sends a first command to the second device. Correspondingly, the second device receives the first command from the first device.

The first command includes the second authentication policy and/or the second security policy, and a tag identifier of the first tag. The tag identifier of the first tag may be an EPC of the first tag. It may be understood that, after receiving the first command, the second device may execute a corresponding authentication process based on the second authentication policy in the first command, and/or activate/enable a corresponding security policy based on the second security policy in the first command. The first command herein may be understood as an authentication request.

Optionally, after step S304, the method may further include the following steps S305 to S309.

S305: The second device performs an authentication process based on the second authentication policy and the first tag.

Optionally, in some feasible implementations, before S305, the second device may further send a response message corresponding to the first command to the first device, where the response message includes information such as the second authentication policy.

S306: The second device sends a first authentication result message to the first device. Correspondingly, the first device receives the first authentication result message from the second device.

In some feasible implementations, after the second device receives the first command, the second device may execute a corresponding authentication process based on the second authentication policy in the first command and the first tag, and/or activate/enable a corresponding security policy based on the second security policy in the first command, and determine whether a key needs to be derived.

It may be understood that, after performing the authentication process, the second device may send the first authentication result message to the first device, where the first authentication result message may include one or more of the second security policy, the EPC of the first tag, an authentication result, and the key. The authentication result is an identifier indicating whether the authentication succeeds.

Optionally, after performing the authentication process, the second device may send another first authentication result message to the AF, where the first authentication result message may include one or more of the AF layer security policy in the second security policy and the key.

S307: The first device updates the security information of the first tag based on the first authentication result message.

In some feasible implementations, the first device may update the security information of the first tag based on the first authentication result message. For example, when the authentication result in the first authentication result message is authentication success, the first device may update the security information of the first tag based on the second authentication policy and/or the second security policy in the first command and the historically recorded security information of the first tag.

For example, it is assumed that, in the historically recorded security information of the first tag, the first authentication policy is that unidirectional authentication of the tag on the network is completed/passed, and the first security policy is that AF layer confidentiality protection and integrity protection are enabled, and in the first command, the second authentication policy is unidirectional authentication of the network on the tag or bidirectional authentication, and the second security policy is that NAS layer confidentiality protection and integrity protection are enabled. It is also assumed that the authentication result in the first authentication result message is authentication success. In this case, in updated security information of the first tag, an authentication policy is bidirectional authentication, and a security policy is that NAS layer confidentiality protection and integrity protection are enabled.

S308: The first device sends the first operation command to the first tag based on the updated security information.

In some feasible implementations, when the first device determines that the updated security information meets the first operation command security policy corresponding to the first operation command, the first device may send the first operation command to the first tag through a base station, and correspondingly, the first tag receives the first operation command from the first device. Further, the first tag may generate a first operation command response corresponding to the first operation command, and send the generated first operation command response to the first device through the base station, and then the first device sends the first operation command response to the AF. For example, assuming that the first operation command is a read command, an operation command response corresponding to the read command may include information such as read data, a 16-bit random number or pseudo random number, and check code CRC. Optionally, the first operation command response generated by the first tag may include information such as a failure cause.

S309: The first device sends the first operation command response of the first operation command to the AF based on the updated security information.

In some feasible implementations, when the first device determines that the updated security information does not meet the first operation command security policy corresponding to the first operation command, the first device may generate the first operation command response corresponding to the first operation command, and send the generated first operation command response to the AF, where the first operation command response may include information such as a failure cause.

Optionally, if the first operation command response includes information such as a failure cause, after the AF receives the first operation command response, the AF may determine, based on the first operation command response, whether to continue to send the first operation command to the first device, so that the first device can continue to determine a third authentication policy and/or a third security policy based on the updated security information and the first operation command security policy corresponding to the first operation command, and execute a subsequent process (that is, repeat the foregoing steps S302 to S307), and iteration is stopped until the updated security information meets the first operation command security policy corresponding to the first operation command, or iteration is stopped when a quantity of times of repeated execution meets a preset quantity of times.

Optionally, before step S301, the method may further include the following steps S3001 to S3006.

S3001: The AF sends a service request to the first device. Correspondingly, the first device receives the service request from the AF.

In some feasible implementations, the service request may include the security policy expected by the AF and/or the authentication policy expected by the AF. Optionally, the service request may further include a parameter such as an instruction type or a tag range.

S3002: The first tag sends a registration request to the first device through the base station. Correspondingly, the first device receives the registration request from the first tag.

In some feasible implementations, the first device may determine an inventory base station based on the parameter in the service request, and then the first device sends an inventory command to the inventory base station. The inventory command includes a parameter such as a range of an inventory tag. Further, the base station and the tag perform a random access process, that is, interact with each other by using a random access instruction, and finally a tag successfully accesses the base station. Therefore, a tag (for example, the first tag) that successfully accesses the base station sends a registration request to the base station, and the base station sends the registration request to the first device. The registration request includes the tag identifier of the first tag.

S3003: The first device sends a second command to the second device. Correspondingly, the second device receives the second command from the first device.

In some feasible implementations, in a registration process of the first tag, after the first device receives the registration request from the first tag, the first device may generate the second command based on the received registration request, and send the second command to the second device. The second command herein may be specifically understood as an authentication request. The second command includes the tag identifier of the first tag and the security policy expected by the AF and/or the authentication policy expected by the AF. Therefore, the second device may subsequently determine the first authentication policy based on the authentication policy expected by the AF and carried in the second command and the subscription information of the first tag that is stored in the second device, and determine the first security policy based on the security policy expected by the AF and carried in the second command and the subscription information of the first tag that is stored in the second device.

S3004: The second device performs an authentication process based on the first authentication policy and the first tag.

Optionally, before S3004, the second device may send a response message corresponding to the second command to the first device, where the response message includes information such as the first authentication policy.

S3005: The second device sends a second authentication result message to the first device. Correspondingly, the first device receives the second authentication result message from the second device.

In some feasible implementations, in a registration process of the first tag, after the second device receives the second command of the first device, the second device may determine the first authentication policy based on the subscription information of the first tag and the authentication policy expected by the AF, and execute the authentication process based on the first authentication policy. Herein, the first authentication policy determined by the second device based on the subscription information of the first tag and the authentication policy expected by the AF may be understood as an authentication policy during registration of the first tag.

In some feasible implementations, the second device may further determine the first security policy based on the security policy expected by the AF and carried in the second command and the subscription information of the first tag that is stored in the second device, and determine, based on the first security policy, whether a key needs to be derived. If determining that a key needs to be derived, the second device derives, based on a root key K in the subscription information of the tag, a key corresponding to the AF layer security policy and/or the NAS layer security policy in the first security policy, or if determining that a key does not need to be derived, the second device does not perform a key derivation process.

It may be understood that, after performing the authentication process, the second device may send the second authentication result message to the first device, where the second authentication result message may include one or more of the one or more operation command security policies, the first security policy, the key, the EPC of the first tag, and an authentication result. The authentication result may include an identifier indicating whether the authentication succeeds.

Optionally, after performing the authentication process, the second device may send another second authentication result message to the AF, where the second authentication result message includes one or more of the AF layer security policy in the first security policy and the key. Correspondingly, the AF receives the second authentication result message from the second device.

S3006: The first device sends a registration accept notification of the registration request to the first tag through the base station. Correspondingly, the first tag receives the registration accept notification from the first device.

In some feasible implementations, after the first device receives the second authentication result message from the second device, if the first device determines that the authentication result included in the second authentication result message is authentication success, the first device generates the registration accept notification, and sends the generated registration accept notification to the first tag through the base station. The registration accept notification includes the first security policy, and the first security policy is used by the first tag to determine whether to generate a key. That is, the first tag may determine, based on the first security policy, whether to generate a key. If determining that a key needs to be derived, the first tag derives, based on a root key K in the subscription information of the first tag, a key corresponding to the first security policy, or if determining that a key does not need to be derived, the first tag does not perform a key derivation process. Therefore, the first tag may subsequently perform integrity protection and confidentiality protection on communication data based on the key, thereby reducing a problem that the data is leaked or tampered with in a data transmission process.

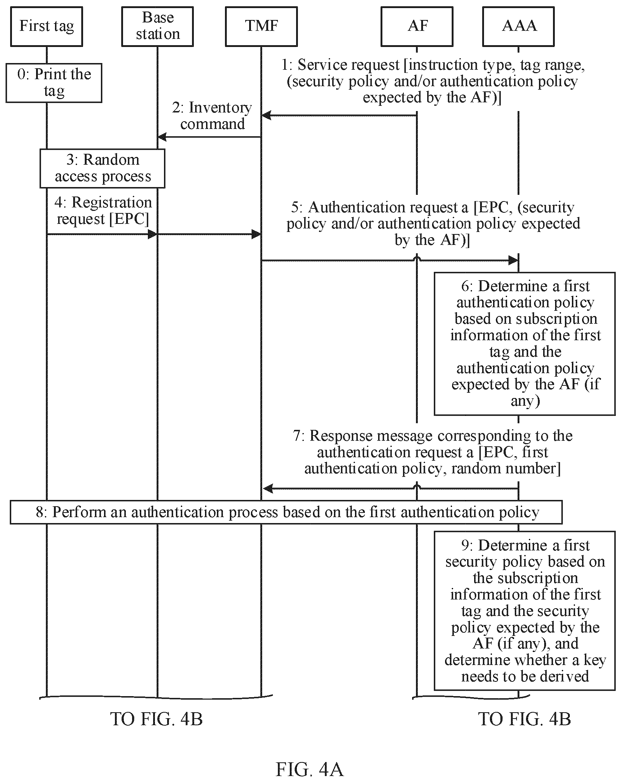

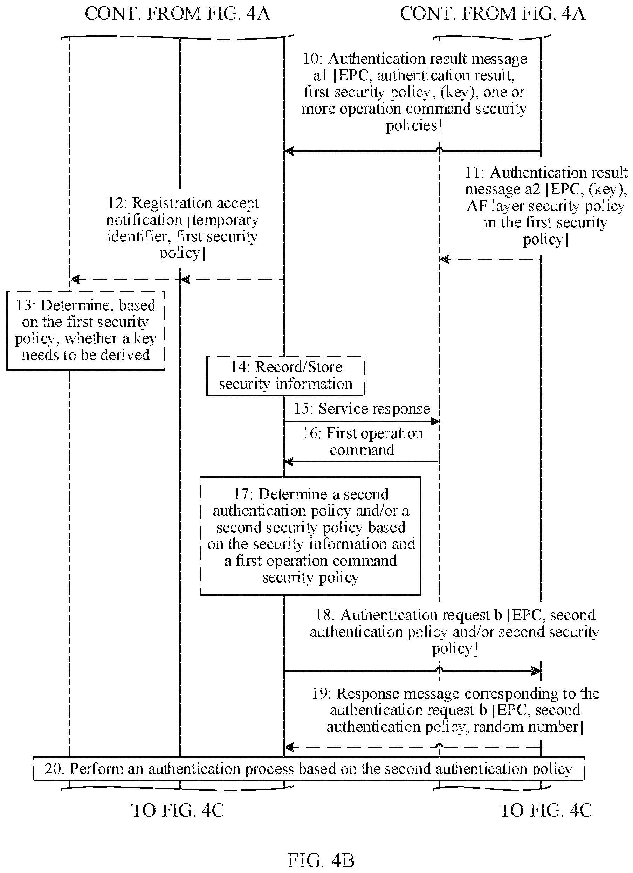

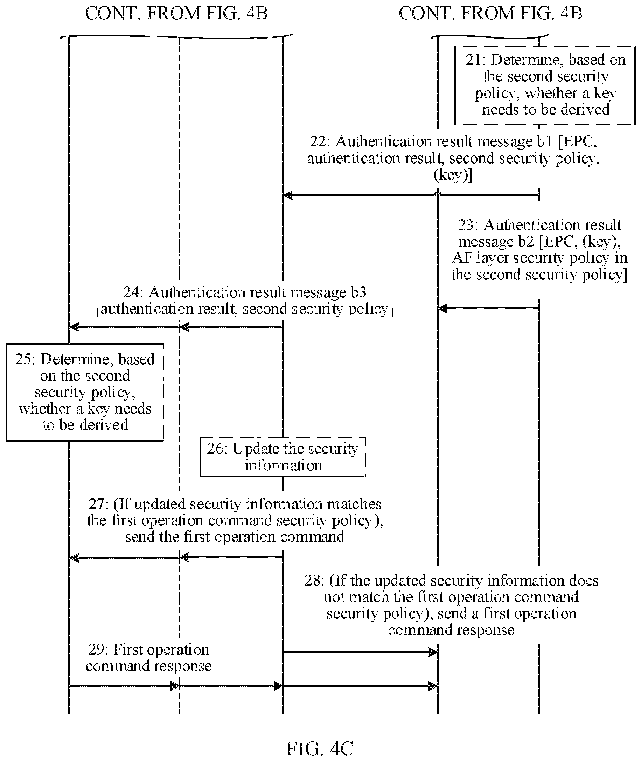

For example, FIG. 4A to FIG. 4C are a diagram of a scenario of a TMF-trigged check for security information and an operation command according to an embodiment of this application. As shown in FIG. 4A to FIG. 4C, in an example in which a first device is a TMF, and a second device is an AAA, after a reader is integrated into a base station, a passive internet of things service process is as follows:
Step 0: An enterprise prints a tag and writes the tag into an EPC to identify an attached item, and also writes subscription information of the tag such as a root key K and an authentication policy during registration. The root key K is used to derive a key. The tag includes a first tag.
Step 1: An AF (through an NEF or a proxy (proxy)) sends a service request to the TMF, where the service request includes a parameter such as an instruction type or a tag range. Optionally, the service request may further include a security policy expected by the AF and/or an authentication policy expected by the AF. For example, the security policy expected by the AF may include a NAS layer security policy and/or an AF layer security policy.
Step 2: The TMF determines an inventory base station based on the parameter in the service request. The TMF sends an inventory command to the inventory base station, where the inventory command includes a parameter such as a range of an inventory tag.
Step 3: The base station and the tag perform a random access process, that is, interact with each other by using a random access instruction, and finally a tag successfully accesses the base station.
Step 4: The tag (for example, the first tag in this embodiment of this application) that successfully accesses the base station sends a registration request to the base station, and the base station sends the registration request to the TMF. The registration request includes a parameter such as an EPC of the first tag.
Step 5: The TMF generates an authentication request a based on the registration request, and sends the authentication request a (through the NEF or the proxy (proxy)) to the AAA, where the authentication request a includes the parameter such as the EPC of the first tag. Optionally, if the AF carries, in step 1, the security policy expected by the AF and/or the authentication policy expected by the AF, the TMF adds, to the authentication request a, parameters such as the security policy expected by the AF and/or the authentication policy expected by the AF.
Step 6: The AAA determines a first authentication policy based on the subscription information of the first tag and the authentication policy expected by the AF (if any). Herein, the first authentication policy is an authentication policy during registration.
Step 7: The AAA sends a response message corresponding to the authentication request a to the TMF, where the response message includes one or more parameters such as the EPC of the first tag, the first authentication policy, a random number, and a response value.
Step 8: The AAA performs an authentication process based on the first authentication policy and the first tag.
Step 9: After the authentication succeeds, the AAA determines a first security policy based on the subscription information of the first tag and the security policy expected by the AF (if any), and determines whether a key needs to be derived. If determining that a key needs to be derived, the AAA derives, based on the root key K in the subscription information of the first tag, a key corresponding to the first security policy, or if determining that a key does not need to be derived, the AAA does not perform a key derivation process.
Step 10: The AAA sends an authentication result message a1 to the TMF, where the authentication result message a1 includes one or more of the EPC of the first tag, an authentication result, the first security policy, one or more operation command security policies, and the key (if any).
Step 11: The AAA sends an authentication result message a2 to the AF, where the authentication result message a2 includes one or more of the EPC of the first tag, an AF layer security policy in the first security policy, and the key (if any).
Step 12: The TMF sends a registration accept notification to the first tag, where the registration accept notification may include information such as a temporary identifier allocated by a network to the first tag and the first security policy.
Step 13: The first tag determines, based on the first security policy in the registration accept notification, whether a key needs to be derived. If determining that a key needs to be derived, the first tag derives, based on the root key K in the subscription information of the first tag, a key corresponding to the first security policy, or if determining that a key does not need to be derived, the first tag does not perform a key derivation process.
Step 14: The TMF records/stores security information. The recorded security information includes the first authentication policy in step 7 and the first security policy in step 10.
Step 15: If the instruction type in the service request in step 1 indicates that there is a subsequent operation command, the TMF sends a service response to the AF, where the service response includes the EPC of the first tag.
Step 16: The AF sends a first operation command to the TMF, where the first operation command includes the EPC of the first tag and a related parameter of the first operation command.
Step 17: After receiving the first operation command, the TMF determines a second authentication policy and/or a second security policy based on the security information recorded/stored in step 14 and a first operation command security policy corresponding to the first operation command included in the one or more operation command security policies in step 10.
Step 18: The TMF sends an authentication request b to the AAA, where the authentication request b includes parameters such as the EPC of the first tag, and the second authentication policy and/or the second security policy.
Step 19: Optionally, the AAA sends a response message corresponding to the authentication request b to the TMF, where the response message includes one or more parameters such as the EPC of the first tag, the second authentication policy, and a random number.
Step 20: The AAA performs an authentication process based on the second authentication policy and the first tag.
Step 21: The AAA determines, based on the second security policy, whether a key needs to be derived. If determining that a key needs to be derived, the AAA derives, based on the root key K in the subscription information of the first tag, a key corresponding to the second security policy, or if determining that a key does not need to be derived, the AAA does not perform a key derivation process.
Step 22: The AAA sends an authentication result message b1 to the TMF, where the authentication result message b1 includes information such as the EPC of the first tag, an authentication result, the second security policy, and the key (if any).
Step 23: The AAA sends an authentication result message b2 to the AF, where the authentication result message b2 includes information such as the EPC of the first tag, an AF layer security policy in the second security policy, and the key (if any).
Step 24: The TMF sends an authentication result message b3 to the first tag, where the authentication result message b3 may include information such as an authentication result and the second security policy.
Step 25: The first tag determines, based on the second security policy in the authentication result message b3, whether a key needs to be derived. If determining that a key needs to be derived, the first tag derives, based on the root key K in the subscription information of the first tag, a key corresponding to the second security policy, or if determining that a key does not need to be derived, the first tag does not perform a key derivation process.
Step 26: The TMF updates the security information. Specifically, when the TMF determines that the authentication result in the authentication result message b1 is authentication success, the TMF may update, based on the second authentication policy and/or the second security policy in step 18, the security information stored in step 14, and record/store updated security information.

Further, the TMF may determine a subsequent operation based on the updated security information.

Step 27: If the updated security information matches the first operation command security policy, the TMF sends the first operation command to the first tag through the base station. Herein, that the updated security information matches the first operation command security policy may be understood as that the updated security information meets the first operation command security policy.

Step 28: If the updated security information does not match the first operation command security policy, the TMF sends a first operation command response to the AF, where the first operation command response may include a failure cause and the like. That is, when the updated security information does not match the first operation command security policy, the first operation command response is generated by the TMF and directly fed back to the AF.

Step 29: After the first tag receives the first operation command (that is, after step 27), the first tag may send the first operation command response to the TMF through the base station, and then the TMF sends the first operation command response to the AF. That is, the first operation command response is generated by using the first tag.

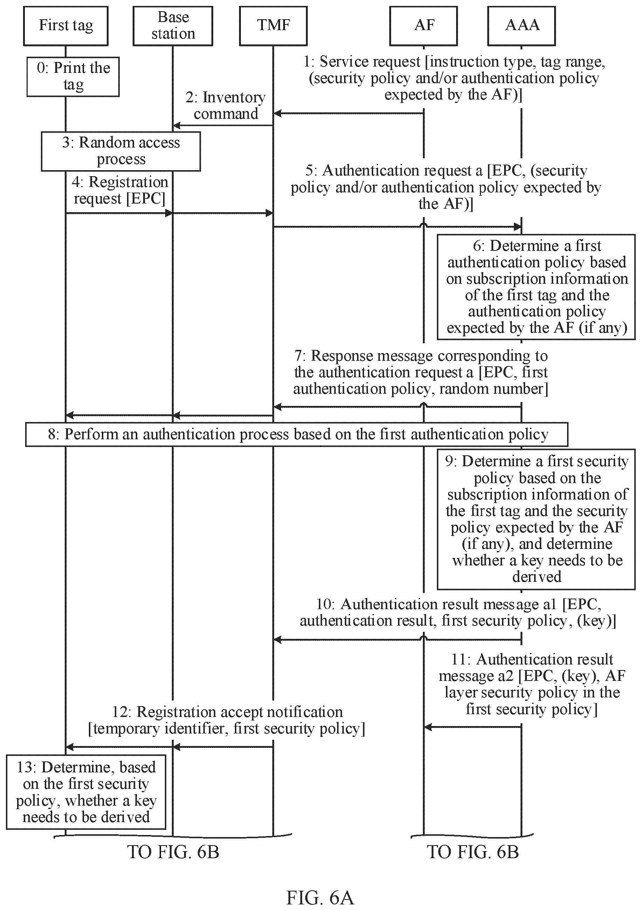

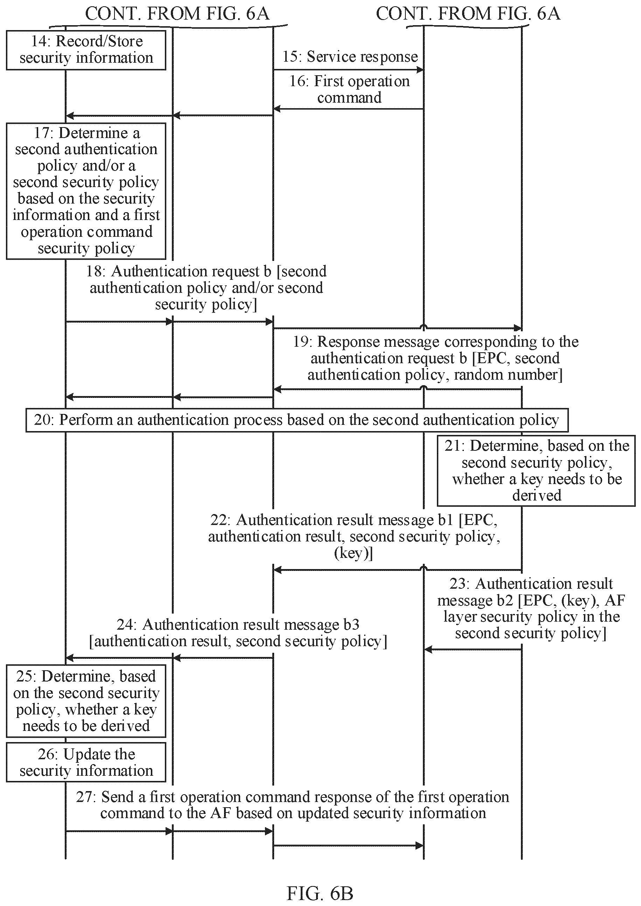

It may be understood that the authentication request a in FIG. 6A and FIG. 6B is equivalent to the second command described in this embodiment of this application, and the authentication request b in FIG. 6A and FIG. 6B is equivalent to the first command described in this embodiment of this application. The authentication result message a1 in FIG. 6A and FIG. 6B is equivalent to that the second device sends the second authentication result message to the first device in step S3005 of this application, and the authentication result message a2 in FIG. 6A and FIG. 6B is equivalent to that the second device sends the second authentication result message to the AF. The authentication result message b1 in FIG. 6A and FIG. 6B is equivalent to that the second device sends the first authentication result message to the first device in step S306 of this application, and the authentication result message b2 in FIG. 6A and FIG. 6B is equivalent to that the second device sends the first authentication result message to the AF.

In this embodiment of this application, the first device is a TMF or an AMF, or the TMF and the AMF may be integrated, and the second device is an AAA or a UDM. The TMF records security information, that is, an authentication policy and/or a security policy that have/has been executed. After receiving the first operation command, the TMF checks whether the locally recorded security information meets the operation command security policy of the first operation command, and if no, the TMF triggers a new authentication process, and a trigger command includes an authentication manner, security protection (for example, NAS layer integrity protection) that needs to be enabled after the authentication, and the like, or if yes, the TMF sends the first operation command to the tag, and completes the newly added security protection. In this manner of checking the security information and the first operation command security policy corresponding to the first operation command, the authentication policy and/or the security policy (that is, the second authentication policy and/or the second security policy) that needs to be additionally executed by the first tag may be determined. Compared with a solution in the conventional technology in which the second authentication policy is determined based only on the first operation command security policy, this embodiment of this application further considers an authentication policy that has been executed. This helps reduce complexity of an authentication process, without repeatedly executing the authentication policy and/or the security policy (that is, the first authentication policy and/or the first security policy) that have/has been executed in a process of delivering the first operation command. In addition, through this security check, identity security and data security in a process of executing the first operation command can be further ensured.

The following describes in detail the communication method and the communication apparatus provided in this application.

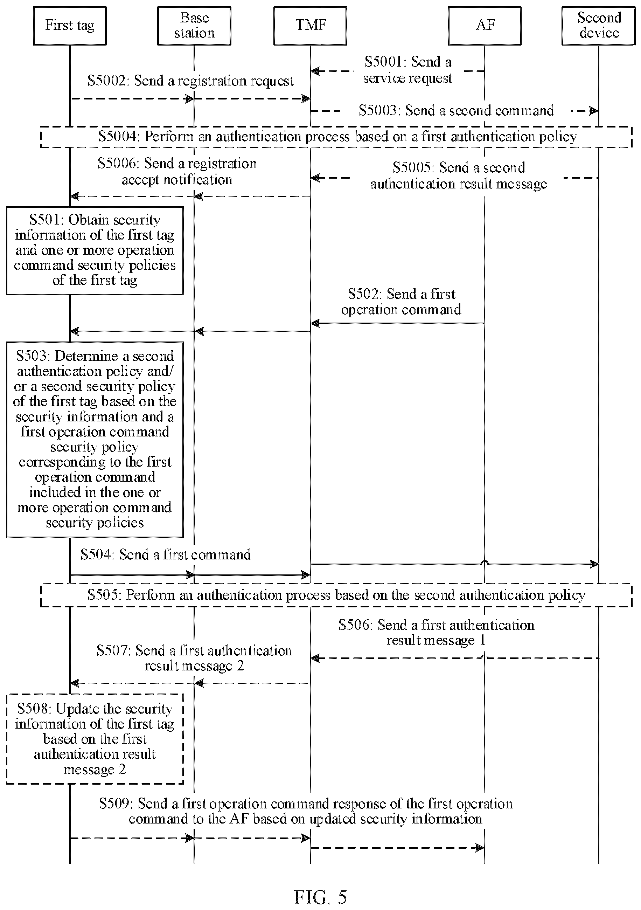

FIG. 5 is another schematic flowchart of a communication method according to an embodiment of this application. As shown in FIG. 5, the communication method includes the following steps S501 to S5006. The method shown in FIG. 5 may be executed by a first device, a second device, and an AF. Alternatively, the method shown in FIG. 5 may be executed by a chip in the first device, a chip in the second device, and a chip in the AF. The first device may be a first tag, and the second device may be an AAA, a UDM, or the like. This is not limited herein. It should be noted that FIG. 5 is a schematic flowchart of a method embodiment of this application, and shows detailed communication steps or operations of the method. However, these steps or operations are merely examples. Variants of various operations in FIG. 5 or other operations may be further performed in embodiments of this application. In addition, the steps in FIG. 5 may be separately performed in a sequence different from that shown in FIG. 5, and possibly, not all the operations in FIG. 5 need to be performed. FIG. 5 is described by using an example in which the first tag, a TMF (or may be an AMF), the second device, and the AF are execution bodies of the method.

S501: The first tag obtains security information of the first tag and one or more operation command security policies of the first tag.

In some feasible implementations, the security information of the first tag includes a first authentication policy and/or a first security policy. Herein, the first tag is a tag successfully accessed or a tag successfully registered. The first authentication policy is an authentication policy executed before a first operation command is received, and the first security policy is a security policy executed before the first operation command is received.

For example, the first authentication policy includes an authentication policy during registration of the first tag that is sent by the AAA or the UDM, or the first authentication policy includes the authentication policy during registration and an authentication policy determined for a second operation command before the first operation command. The authentication policy during registration of the first tag may be determined based on subscription information of the first tag and an authentication policy expected by the AF.

For example, the first security policy is determined based on the subscription information of the first tag and a security policy expected by the AF, or the first security policy includes a security policy determined for the second operation command before the first operation command. That is, the first authentication policy may be understood as an authentication policy that has been executed, has taken effect, has been activated, or has been successfully enabled, and the first security policy may be understood as a security policy that has been executed, has taken effect, has been activated, or has been successfully enabled. The security policy in this embodiment of this application includes an AF layer security policy and/or a NAS layer security policy.

For an implementation of the security policy, refer to Table 1. Details are not described herein.

In this embodiment of this application, the subscription information of the first tag includes the one or more operation command security policies of the first tag. The one or more operation command security policies of the first tag may be understood as operation command security policies corresponding to one or more operation commands for the first tag. Generally, one operation command corresponds to one operation command security policy, and operation command security policies corresponding to different operation commands may be the same or may be different. It may be understood that an operation command security policy corresponding to an operation command in this embodiment of this application may generally include an authentication policy corresponding to the operation command and/or a security policy corresponding to the operation command (that is, an AF layer security policy and/or a NAS layer security policy). For example, the operation command may be a read (Read) command, a write (Write) command, a kill (Kill) command, or a lock (Lock) command. This is not limited herein. For example, an operation command security policy corresponding to the read command is that bidirectional authentication is required, and AF layer confidentiality protection and integrity protection and NAS layer confidentiality protection and integrity protection further need to be enabled. An operation command security policy corresponding to the write command is that unidirectional authentication of a tag on a network is required, and AF layer confidentiality protection and integrity protection and NAS layer confidentiality protection and integrity protection further need to be enabled. An operation command security policy corresponding to the kill command is that unidirectional authentication of a tag on a network is required. An operation command security policy corresponding to the lock command is that unidirectional authentication of a tag on a network is required.

For an implementation of the operation command security policy, refer to Table 2. Details are not described herein.

S502: The AF sends the first operation command to the first tag. Correspondingly, the first tag receives the first operation command from the AF.

In some feasible implementations, that the AF sends the first operation command to the first tag may be understood as: The AF sends the first operation command to the TMF, and then the TMF sends the first operation command to the first tag through a base station. The first operation command may be any one of the one or more operation commands for the first tag. The first operation command corresponds to a first operation command security policy, and the first operation command security policy includes an authentication policy corresponding to the first operation command and/or a security policy corresponding to the first operation command.

S503: The first tag determines a second authentication policy and/or a second security policy of the first tag based on the security information and the first operation command security policy corresponding to the first operation command included in the one or more operation command security policies.

In some feasible implementations, that the first tag determines the second authentication policy and/or the second security policy of the first tag based on the security information and the first operation command security policy corresponding to the first operation command included in the one or more operation command security policies may be understood as: The first tag determines the second authentication policy based on the first authentication policy and the authentication policy corresponding to the first operation command, and determines the second security policy based on the first security policy and the security policy corresponding to the first operation command. Specifically, determining the second security policy based on the first security policy and the security policy corresponding to the first operation command may be understood as: determining an AF layer security policy in the second security policy based on an AF layer security policy in the first security policy and an AF layer security policy in the security policy corresponding to the first operation command, and/or determining a NAS layer security policy in the second security policy based on a NAS layer security policy in the first security policy and a NAS layer security policy in the security policy corresponding to the first operation command.

For example, it is assumed that the first operation command is a read command, where an operation command security policy corresponding to the read command is that bidirectional authentication is required, and AF layer confidentiality protection and integrity protection and NAS layer confidentiality protection and integrity protection further need to be enabled. It is also assumed that, in the security information of the first tag, the first authentication policy is that unidirectional authentication of the tag on the network is completed/passed, and the first security policy is that AF layer confidentiality protection and integrity protection are enabled. In this case, the second authentication policy determined based on the foregoing information is unidirectional authentication of the network on the tag, and the second security policy determined based on the foregoing information is that NAS layer confidentiality protection and integrity protection are enabled.

S504: The first tag sends a first command to the second device. Correspondingly, the second device receives the first command from the first tag.

In some feasible implementations, that the first tag sends the first operation command to the second device may be understood as: The first tag sends the first operation command to the TMF through the base station, and then the TMF sends the first operation command to the second device. The first command includes the second authentication policy and/or the second security policy, and a tag identifier of the first tag. The tag identifier of the first tag may be an EPC of the first tag. It may be understood that, after receiving the first command, the second device may execute a corresponding authentication process based on the second authentication policy in the first command, and/or activate/enable a corresponding security policy based on the second security policy in the first command. The first command herein may be understood as an authentication request.

Optionally, after step S504, the method may further include the following steps S505 to S509.

S505: The second device performs an authentication process based on the second authentication policy and the first tag.

Optionally, in some feasible implementations, before S505, the second device may further send a response message corresponding to the first command to the first device, where the response message includes information such as the second authentication policy.

S506: The second device sends a first authentication result message 1 to the TMF. Correspondingly, the TMF receives the first authentication result message 1.

In some feasible implementations, after the second device receives the first command, the second device may execute a corresponding authentication process based on the second authentication policy in the first command and the first tag, and/or activate/enable a corresponding security policy based on the second security policy in the first command, and determine whether a key needs to be derived.

It may be understood that, after performing the authentication process, the second device may send a first authentication result message to the TMF, for example, the first authentication result message 1. The first authentication result message 1 may include one or more of the second security policy, the EPC of the first tag, an authentication result, and the key. The authentication result includes an identifier indicating whether the authentication succeeds.

Optionally, after performing the authentication process, the second device may send another first authentication result message to the AF, where the first authentication result message includes one or more of the AF layer security policy in the second security policy and the key.

S507: The TMF generates a first authentication result message 2 based on the first authentication result message 1, and sends the first authentication result message 2 to the first tag.

In some feasible implementations, after the TMF receives the first authentication result message 1 from the second device, the TMF may generate the first authentication result message 2 based on the first authentication result message 1, where the first authentication result message 2 includes one or more of the second security policy, the EPC of the first tag, and an authentication result. Herein, the TMF may specifically send the first authentication result message 2 to the first tag through the base station.

S508: The first tag updates the security information of the first tag based on the first authentication result message 2.

In some feasible implementations, the first tag may update the security information of the first tag based on the first authentication result message 2. For example, when the authentication result in the first authentication result message 2 is authentication success, the first device may update the security information of the first tag based on the second authentication policy and/or the second security policy in the first command and the historically recorded security information of the first tag.

For example, it is assumed that, in the historically recorded security information of the first tag, the first authentication policy is that unidirectional authentication of the tag on the network is completed/passed, and the first security policy is that AF layer confidentiality protection and integrity protection are enabled, and in the first command, the second authentication policy is unidirectional authentication of the network on the tag, and the second security policy is that NAS layer confidentiality protection and integrity protection are enabled. It is also assumed that the authentication result in the first authentication result message 2 is authentication success. In this case, updated security information of the first tag is bidirectional authentication, and NAS layer confidentiality protection and integrity protection are enabled.

S509: The first tag sends the first operation command response of the first operation command to the AF based on the updated security information.

In some feasible implementations, that the first tag sends the first operation command response of the first operation command to the AF based on the updated security information may be understood as: The first tag generates the first operation command response of the first operation command based on the updated security information, and sends the first operation command response to the TMF through the base station, and then the TMF sends the first operation command response to the AF.

For example, it is assumed that the first operation command is a read command. In this case, when the first tag determines that the updated security information meets an operation command security policy corresponding to the read command, the first operation response generated by the first tag may include information such as read data, a 16-bit random number or a pseudo-random number, and check code CRC.

For example, when the first tag determines that the updated security information does not meet the first operation command security policy corresponding to the first operation command, the first operation command response generated by the first tag may include a failure cause and the like.

Optionally, if the first operation command response includes information such as a failure cause, after the AF receives the first operation command response, the AF may determine, based on the first operation command response, whether to continue to send the first operation command to the first tag, so that the first tag an continue to determine a third authentication policy and/or a third security policy based on the updated security information and the first operation command security policy corresponding to the first operation command, and execute a subsequent process (that is, repeat the foregoing steps S502 to S507), and iteration is stopped until the updated security information meets the first operation command security policy corresponding to the first operation command, or iteration is stopped when a quantity of times of repeated execution meets a preset quantity of times.

Optionally, before step S501, when the first tag initially accesses the network, the method may further include the following steps S5001 to S5006.

S5001: The AF sends a service request to the TMF. Correspondingly, the TMF receives the service request from the AF.

In some feasible implementations, the service request may include the security policy expected by the AF and/or the authentication policy expected by the AF. Optionally, the service request may further include a parameter such as an instruction type or a tag range.

S5002: The first tag sends a registration request to the TMF through the base station. Correspondingly, the TMF receives the registration request from the first tag.

In some feasible implementations, the TMF may determine an inventory base station based on the parameter in the service request, and then the TMF sends an inventory command to the inventory base station. The inventory command includes a parameter such as a range of an inventory tag. Further, the base station and the tag perform a random access process, that is, interact with each other by using a random access instruction, and finally a tag successfully accesses the base station. Therefore, a tag (for example, the first tag) that successfully accesses the base station sends a registration request to the base station, and the base station sends the registration request to the TMF. The registration request includes the tag identifier of the first tag.

S5003: The TMF sends a second command to the second device. Correspondingly, the second device receives the second command from the TMF.

In some feasible implementations, in a registration process of the first tag, after the TMF receives the registration request from the first tag, the TMF may generate the second command based on the received registration request, and send the second command to the second device. The second command herein may be specifically understood as an authentication request. The second command includes the tag identifier of the first tag and the security policy expected by the AF and/or the authentication policy expected by the AF. Therefore, the second device may subsequently determine the first authentication policy based on the authentication policy expected by the AF and carried in the second command and the subscription information of the first tag that is stored in the second device, and determine the first security policy based on the security policy expected by the AF and carried in the second command and the subscription information of the first tag that is stored in the second device.

S5004: The second device performs an authentication process based on the first authentication policy and the first tag.

Optionally, before S5004, the second device may send a response message corresponding to the second command to the TMF, where the response message includes information such as the first authentication policy.

S5005: The second device sends a second authentication result message to the TMF. Correspondingly, the TMF receives the second authentication result message from the second device.

In some feasible implementations, in a registration process of the first tag, after the second device receives the second command of the TMF, the second device may determine the first authentication policy based on the subscription information of the first tag and the authentication policy expected by the AF, and execute the authentication process based on the first authentication policy. Herein, the first authentication policy determined by the second device based on the subscription information of the first tag and the authentication policy expected by the AF may be understood as an authentication policy during registration of the first tag.

In some feasible implementations, the second device may further determine the first security policy based on the security policy expected by the AF and carried in the second command and the subscription information of the first tag that is stored in the second device, and determine, based on the first security policy, whether a key needs to be derived. If determining that a key needs to be derived, the second device derives, based on a root key K in the subscription information of the tag, a key corresponding to the AF layer security policy and/or the NAS layer security policy in the first security policy, or if determining that a key does not need to be derived, the second device does not perform a key derivation process.

It may be understood that, after performing the authentication process, the second device may send the second authentication result message to the TMF, where the second authentication result message may include one or more of the one or more operation command security policies, the first security policy, the key, the EPC of the first tag, and an authentication result. The authentication result may include an identifier indicating whether the authentication succeeds.

Optionally, after performing the authentication process, the second device may send another second authentication result message to the AF, where the second authentication result message includes one or more of the AF layer security policy in the first security policy and the key. Correspondingly, the AF receives the second authentication result message from the second device.

S5006: The TMF sends a registration accept notification of the registration request to the first tag through the base station. Correspondingly, the first tag receives the registration accept notification from the TMF.

In some feasible implementations, after the TMF receives the second authentication result message from the second device, if the TMF determines that the authentication result included in the second authentication result message is authentication success, the TMF generates the registration accept notification, and sends the generated registration accept notification to the first tag through the base station. The registration accept notification includes the first security policy, and the first security policy is used by the first tag to determine whether to generate a key. That is, the first tag may determine, based on the first security policy, whether to generate a key. If determining that a key needs to be derived, the first tag derives, based on a root key K in the subscription information of the first tag, a key corresponding to the first security policy, or if determining that a key does not need to be derived, the first tag does not perform a key derivation process. Therefore, the first tag may subsequently perform integrity protection and confidentiality protection on communication data based on the key, thereby reducing a problem that the data is leaked or tampered with in a data transmission process.

For example, FIG. 6A and FIG. 6B are a diagram of a scenario of a first tag-trigged check for security information and an operation command according to an embodiment of this application. As shown in FIG. 6A and FIG. 6B, in an example in which a first device is a first tag, and a second device is an AAA, after a reader is integrated into a base station, a passive internet of things service process is as follows:
Step 0: An enterprise prints a tag and writes the tag into an EPC to identify an attached item, and also writes subscription information of the tag such as a root key K and an authentication policy during registration. The root key K is used to derive a key. The tag includes a first tag.
Step 1: An AF (through an NEF or a proxy (proxy)) sends a service request to a TMF, where the service request includes a parameter such as an instruction type or a tag range. Optionally, the service request may further include a security policy expected by the AF and/or an authentication policy expected by the AF. For example, the security policy expected by the AF may include a NAS layer security policy and/or an AF layer security policy.
Step 2: The TMF determines an inventory base station based on the parameter in the service request. The TMF sends an inventory command to the inventory base station, where the inventory command includes a parameter such as a range of an inventory tag.
Step 3: The base station and the tag perform a random access process, that is, interact with each other by using a random access instruction, and finally a tag successfully accesses the base station.
Step 4: The tag (for example, the first tag in this embodiment of this application) that successfully accesses the base station sends a registration request to the base station, and the base station sends the registration request to the TMF. The registration request includes a parameter such as an EPC of the first tag.
Step 5: The TMF generates an authentication request a based on the registration request, and sends the authentication request a to the AAA, where the authentication request a includes the parameter such as the EPC of the first tag. Optionally, if the AF carries, in step 1, the security policy expected by the AF and/or the authentication policy expected by the AF, the TMF adds, to the authentication request a, parameters such as the security policy expected by the AF and/or the authentication policy expected by the AF.
Step 6: The AAA determines a first authentication policy based on the subscription information of the first tag and the authentication policy expected by the AF (if any). Herein, the first authentication policy is an authentication policy during registration.
Step 7: The AAA sends a response message corresponding to the authentication response a to the TMF, where the response message includes one or more parameters such as the EPC of the first tag, the first authentication policy, and a random number. Further, the TMF sends the response message to the first tag through the base station.
Step 8: The AAA performs an authentication process based on the first authentication policy and the first tag.
Step 9: After the authentication succeeds, the AAA determines a first security policy based on the subscription information of the first tag and the security policy expected by the AF (if any), and determines whether a key needs to be derived. If determining that a key needs to be derived, the AAA derives, based on the root key K in the subscription information of the first tag, a key corresponding to the first security policy, or if determining that a key does not need to be derived, the AAA does not perform a key derivation process.
Step 10: The AAA sends an authentication result message a1 to the TMF, where the authentication result message a1 includes one or more of the EPC of the first tag, an authentication result, the first security policy, and the key (if any).
Step 11: The AAA sends an authentication result message a2 to the AF, where the authentication result message a2 includes one or more of an AF layer security policy in the first security policy and the key (if any).
Step 12: The TMF sends a registration accept notification to the first tag, where the registration accept notification may include information such as a temporary identifier allocated by a network to the first tag and the first security policy.
Step 13: The first tag determines, based on the first security policy in the registration accept notification, whether a key needs to be derived. If determining that a key needs to be derived, the first tag derives, based on the root key K in the subscription information of the first tag, a key corresponding to the first security policy, or if determining that a key does not need to be derived, the first tag does not perform a key derivation process.
Step 14: The first tag records/stores security information. The recorded security information includes the first authentication policy in step 7 and the first security policy in step 12.
Step 15: If the instruction type in the service request in step 1 indicates that there is a subsequent operation command, the TMF sends a service response to the AF, where the service response includes the EPC of the first tag.
Step 16: The AF sends a first operation command to the TMF, where the first operation command includes the EPC of the first tag and a related parameter of the first operation command. Further, the TMF sends the first operation command to the first tag through the base station.
Step 17: After receiving the first operation command, the first tag determines a second authentication policy and/or a second security policy based on the security information in step 14 and a first operation command security policy corresponding to the first operation command included in the one or more operation command security policies in the subscription information of the first tag.
Step 18: The first tag sends an authentication request b to the TMF through the base station, and the TMF sends the authentication request b to the AAA, where the authentication request b includes parameters such as the second authentication policy and/or the second security policy.
Step 19: Optionally, the AAA sends a response message corresponding to the authentication request b to the TMF, and the TMF sends the response message to the first tag through the base station. The response message includes one or more parameters such as the EPC of the first tag, the second authentication policy, and a random number.
Step 20: The AAA performs an authentication process based on the second authentication policy and the first tag.
Step 21: The AAA determines, based on the second security policy, whether a key needs to be derived. If determining that a key needs to be derived, the AAA derives, based on the root key K in the subscription information of the first tag, a key corresponding to the second security policy, or if determining that a key does not need to be derived, the AAA does not perform a key derivation process.
Step 22: The AAA sends an authentication result message b1 to the TMF, and the TMF sends the response message to the first tag through the base station. The second authentication response 2 includes information such as the EPC of the first tag, an authentication result, the second security policy, and the key (if any).
Step 23: The AAA sends an authentication result message b2 to the AF, where the authentication result message b2 includes information such as an AF layer security policy in the second security policy and the key (if any).
Step 24: The TMF sends an authentication result message b3 to the first tag, where the authentication result message b3 may include information such as an authentication result and the second security policy.
Step 25: The first tag determines, based on the second security policy in the authentication result message b3, whether a key needs to be derived. If determining that a key needs to be derived, the first tag derives, based on the root key K in the subscription information of the first tag, a key corresponding to the second security policy, or if determining that a key does not need to be derived, the first tag does not perform a key derivation process.
Step 26: The first tag updates security information. Specifically, when the first tag determines that the authentication result in the authentication result message b3 is authentication success, the first tag may update, based on the second authentication policy and/or the second security policy in step 18, the security information stored in step 14, and record/store updated security information.
Step 27: The first tag sends the first operation command response of the first operation command to the AF based on the updated security information. Specifically, the first tag may send the first operation command response to the TMF through the base station, and then the TMF sends the first operation command response to the AF.

It may be understood that the authentication request a in FIG. 6A and FIG. 6B is equivalent to the second command described in this embodiment of this application, and the authentication request b in FIG. 6A and FIG. 6B is equivalent to the first command described in this embodiment of this application. The authentication result message a1 in FIG. 6A and FIG. 6B is equivalent to that the second device sends the second authentication result message to the first tag in step S5005 of this application, and the authentication result message a2 in FIG. 6A and FIG. 6B is equivalent to that the second device sends the second authentication result message to the AF. The authentication result message b1 in FIG. 6A and FIG. 6B is equivalent to that the second device sends the first authentication result message 1 to the TMF in step S506 of this application, the authentication result message b2 in FIG. 6A and FIG. 6B is equivalent to that the second device sends the first authentication result message to the AF, and the authentication result message b3 in FIG. 6A and FIG. 6B is equivalent to that the TMF sends the first authentication result message 2 to the first tag.

In this embodiment of this application, the first device is a first tag, and the second device is an AAA or a UDM. The first tag records security information, that is, an authentication policy and/or a security policy that have/has been executed. After receiving the first operation command, the first tag checks whether the locally recorded security information meets the operation command security policy of the first operation command, and if no, the TMF triggers a new authentication process, and a trigger command includes an authentication manner, security protection (for example, NAS layer integrity protection) that needs to be enabled after the authentication, and the like, or if yes, the first tag sends the first operation command response to the AF and completes the newly added security protection. In this manner of checking the security information and the first operation command security policy corresponding to the first operation command, the authentication policy and/or the security policy (that is, the second authentication policy and/or the second security policy) that needs to be additionally executed by the first tag may be determined. This helps reduce complexity of an authentication process, without repeatedly executing the authentication policy and/or the security policy (that is, the first authentication policy and/or the first security policy) that have/has been executed in a process of delivering the first operation command. In addition, through this security check, identity security and data security in a process of executing the first operation command can be further ensured.

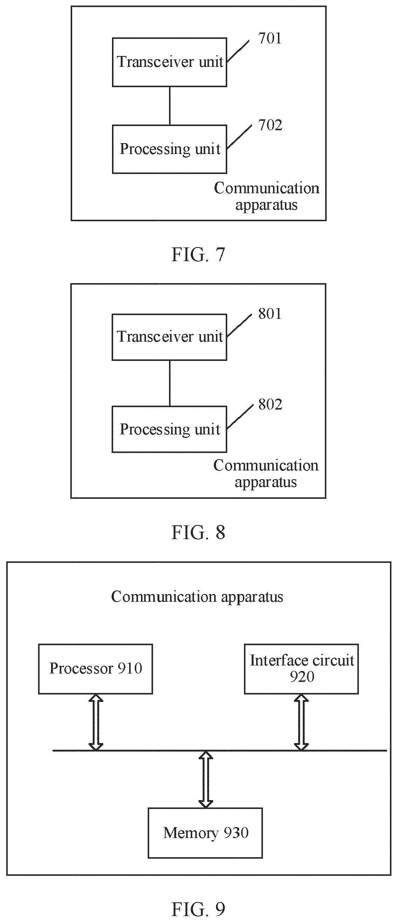

The following describes in detail communication apparatuses provided in this application with reference to FIG. 7 to FIG. 9. It can be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 7 is a diagram of a structure of a communication apparatus according to an embodiment of this application. The communication apparatus shown in FIG. 7 may be configured to perform some or all functions of the first device in the method embodiments described in FIG. 3 to FIG. 6A and FIG. 6B. The apparatus may be a first device, may be an apparatus in the first device, or may be an apparatus that can be used in combination with the first device. For example, the first device may be an entity such as a tag, a TMF, or an AMF. The communication apparatus may alternatively be a chip or a chip system. The communication apparatus shown in FIG. 7 may include a transceiver unit 701 and a processing unit 702. The processing unit 702 is configured to perform data processing. The transceiver unit 701 is integrated with a receiving unit and a sending unit. The transceiver unit 701 may also be referred to as a communication unit. Alternatively, the transceiver unit 701 may be split into a receiving unit and a sending unit. The following processing unit 702 is similar to the transceiver unit 701, and details are not described below.

In an implementation,
the processing unit 702 is configured to obtain security information of a first tag and one or more operation command security policies of the first tag, where the security information is security information that has been executed, and includes a first authentication policy and/or a first security policy; and
the transceiver unit 701 is configured to receive a first operation command from an application function entity AF.

The processing unit 702 is further configured to determine a second authentication policy and/or a second security policy of the first tag based on the security information and a first operation command security policy included in the one or more operation command security policies, where the first operation command security policy corresponds to the first operation command.

The transceiver unit 701 is further configured to send a first command to a second device, where the first command includes the second authentication policy and/or the second security policy, and a tag identifier of the first tag.

In another implementation,
the processing unit 702 is configured to obtain security information of a first tag and one or more operation command security policies of the first tag, where the security information is security information that has been executed, and includes a first authentication policy and/or a first security policy; and
the transceiver unit 701 is configured to receive a first operation command from an application function entity AF, where the first operation command corresponds to a first operation command security policy in the one or more operation command security policies.

The processing unit 702 is further configured to: when the security information meets the first operation command security policy, send the first operation command to the first tag by using the transceiver unit 701, or execute, by the first tag, the first operation command.

The processing unit 702 is further configured to: when the security information does not meet the first operation command security policy corresponding to the first operation command, determine a second authentication policy and/or a second security policy of the first tag based on the security information and the first operation command security policy, and send a first command to a second device by using the transceiver unit 701, where the first command includes the second authentication policy and/or the second security policy and a tag identifier of the first tag.

For another possible implementation of the communication apparatus, refer to the related descriptions of the functions of the first device in the method embodiments corresponding to FIG. 3 to FIG. 6A and FIG. 6B. Details are not described herein.

FIG. 8 is a diagram of a structure of another communication apparatus according to an embodiment of this application. The communication apparatus shown in FIG. 8 may be configured to perform some or all functions of the second device in the method embodiments described in FIG. 3 to FIG. 6A and FIG. 6B. The apparatus may be a second device, may be an apparatus in the second device, or may be an apparatus that can be used in combination with the second device. For example, the second device may be an entity such as an AAA or an UDM. The communication apparatus may alternatively be a chip or a chip system. The communication apparatus shown in FIG. 8 may include a transceiver unit 801 and a processing unit 802.

The processing unit 802 is configured to determine one or more of a first authentication policy, a first security policy, and a key.

The transceiver unit 801 is configured to send one or more of the first authentication policy, the first security policy, and the key to a first device.

The transceiver unit 801 is further configured to receive a first command from the first device, where the first command includes a second authentication policy and/or a second security policy, and a tag identifier of a first tag, and the second authentication policy and/or the second security policy are/is related to the first authentication policy and/or the first security policy and a first operation command security policy corresponding to a first operation command.

For another possible implementation of the communication apparatus, refer to the related descriptions of the functions of the second device in the method embodiments corresponding to FIG. 3 to FIG. 6A and FIG. 6B. Details are not described herein.

In a possible implementation, when the first device or the second device is a chip, the transceiver unit may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor, and the processor may execute computer executable instructions stored in a storage unit, so that the chip performs the methods in FIG. 3 to FIG. 6A and FIG. 6B.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computer machine (advanced RISC machine, ARM) architecture, a network processor (network processor, NP) architecture, or the like. The processor may be a single-core or multi-core processor.

The storage unit may be a storage unit in the chip, for example, a register or a cache. Alternatively, the storage unit may be a storage unit located outside the chip, for example, a ROM, another type of static storage device that can store static information and instructions, or a RAM.

It should be noted that a function corresponding to each of the processor and the interface may be implemented by using a hardware design, may be implemented by using a software design, or may be implemented by a combination of software and hardware. This is not limited herein.

FIG. 9 is a diagram of a structure of another communication apparatus according to an embodiment of this application. The communication apparatus includes a processor 910 and an interface circuit 920. The processor 910 and the interface circuit 920 are coupled to each other. It may be understood that the interface circuit 920 may be a transceiver or an input/output interface. Optionally, the communication apparatus may further include a memory 930, configured to: store instructions executed by the processor 910, or store input data required for running instructions by the processor 910, or store data generated after the processor 910 runs instructions.

When the communication apparatus is configured to implement the method in the foregoing method embodiment, the processor 910 is configured to perform a function of the foregoing processing unit, and the interface circuit 920 is configured to perform a function of the foregoing transceiver unit.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first device or the second device. Certainly, the processor and the storage medium may exist in a first device or the second device as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a digital versatile disc (digital versatile disc, DVD); or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the first device or the second device in the foregoing method embodiment is implemented.

An embodiment of this application further provides a computer program product. The computer program product includes a computer program. When the computer program is executed, the method performed by the first device or the second device in the foregoing method embodiment is implemented.

An embodiment of this application further provides a communication system. The communication system includes a first device or a second device. The first device is configured to perform the method performed by the first device in the foregoing method embodiment. The second device is configured to perform the method performed by the second device in the foregoing method embodiment.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, by way of example but not of limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applied to a first device, and comprises:
obtaining security information of a first tag and one or more operation command security policies in subscription information of the first tag, wherein the security information is security information that has been executed, and comprises a first authentication policy and/or a first security policy;
receiving a first operation command from an application function entity;
determining a second authentication policy and/or a second security policy of the first tag based on the security information and a first operation command security policy comprised in the one or more operation command security policies, wherein the first operation command security policy corresponds to the first operation command; and
sending a first command to a second device, wherein the first command comprises the second authentication policy and/or the second security policy, and a tag identifier of the first tag.

2. The method according to claim 1, wherein the first authentication policy comprises an authentication policy during registration of the first tag from the second device, or the first authentication policy comprises the authentication policy during registration and an authentication policy determined for a second operation command before the first operation command.

3. The method according to claim 1 or 2, wherein the first security policy is determined based on the subscription information of the first tag and a security policy expected by the application function entity, or the first security policy comprises a security policy determined for the second operation command before the first operation command.

4. The method according to any one of claims 1 to 3, wherein the first operation command security policy comprises an authentication policy corresponding to the first operation command and/or a security policy corresponding to the first operation command.

5. The method according to any one of claims 1 to 4, wherein after sending the first command to the second device, the method further comprises:
receiving a first authentication result message from the second device;
updating the security information of the first tag based on the first authentication result message; and
sending the first operation command to the first tag when updated security information meets the first operation command security policy, or sending a first operation command response of the first operation command to the application function entity when updated security information does not meet the first operation command security policy.

6. The method according to claim 5, wherein updating the security information of the first tag based on the first authentication result message comprises:
when an authentication result in the first authentication result message is authentication success, and the first authentication policy is inconsistent with at least one of the second authentication policy and an authentication policy in historically recorded security information of the first tag, updating the first authentication policy and updating the first security policy to the second security policy based on the second authentication policy and the authentication policy in the historically recorded security information of the first tag.

7. The method according to any one of claims 1 to 6, wherein the method further comprises:
receiving a service request from the application function entity, wherein the service request comprises the security policy expected by the application function entity;
receiving a registration request from the first tag, wherein the registration request comprises the tag identifier of the first tag;
sending a second command to the second device, wherein the second command comprises the tag identifier of the first tag and the security policy expected by the application function entity;
receiving a response message corresponding to the second command from the second device, wherein the response message comprises the first authentication policy; and
receiving a second authentication result message from the second device, wherein the second authentication result message comprises one or more of the one or more operation command security policies, the first security policy, and a key.

8. The method according to claim 7, wherein the method further comprises:
sending a registration accept notification of the registration request to the first tag, wherein the registration accept notification comprises the first security policy, and the first security policy is used to generate the key.

9. The method according to any one of claims 1 to 8, wherein the first device is a tag management function or an access and mobility management function.

10. The method according to any one of claims 1 to 6, wherein the security information comprises the first security policy, and obtaining the security information of the first tag comprises:
sending a registration request to a tag management function or a mobility management function, wherein the registration request comprises the tag identifier of the first tag; and
receiving a registration accept notification of the registration request from the tag management function or the mobility management function, wherein the registration accept notification comprises the first security policy; and
the method further comprises:
generating a key based on the first security policy.

11. The method according to any one of claims 1 to 6 or 10, wherein the first device is the first tag.

12. The method according to any one of claims 1 to 11, wherein the first security policy, the second security policy, the security policy expected by the application function entity, and/or the security policy corresponding to the first operation command comprise/comprises an access stratum security policy and/or an application layer security policy.

13. A communication method, wherein the method is applied to a second device, and comprises:
sending one or more of a first authentication policy, a first security policy, and a key to a first device; and
receiving a first command from the first device, wherein the first command comprises a second authentication policy and/or a second security policy, and a tag identifier of a first tag, and the second authentication policy and/or the second security policy are/is related to the first authentication policy and/or the first security policy and a first operation command security policy corresponding to a first operation command.

14. The method according to claim 13, wherein the method further comprises:
sending the key and/or an application layer security policy comprised in the first security policy to an application function entity.

15. The method according to claim 13 or 14, wherein the first authentication policy is an authentication policy executed before the first device receives the first operation command, and the first security policy is a security policy executed before the first device receives the first operation command.

16. The method according to claim 13 or 14, wherein the first authentication policy comprises an authentication policy during registration of the first tag, or the first authentication policy comprises the authentication policy during registration and an authentication policy determined for a second operation command before the first operation command.

17. The method according to any one of claims 13 and 14 to 16, wherein the first security policy is determined based on the subscription information of the first tag and a security policy expected by the application function entity, or the first security policy comprises a security policy determined for the second operation command before the first operation command.

18. The method according to claim 17, wherein the method further comprises:
receiving a second command from the first device, wherein the second command comprises the tag identifier of the first tag and the security policy expected by the application function entity.

19. The method according to claim 18, wherein sending the first authentication policy to the first device comprises:
sending a response message corresponding to the second command to the first device, wherein the response message comprises the first authentication policy.

20. The method according to any one of claims 13 to 19, wherein sending the first security policy to the first device comprises:
sending a second authentication result message to the first device, wherein the second authentication result message comprises the first security policy.

21. The method according to claim 20, wherein the second authentication result message further comprises one or more operation command security policies and/or the key, and the one or more operation command security policies comprise the first operation command security policy corresponding to the first operation command.

22. The method according to any one of claims 17 to 20, wherein the first security policy, the second security policy, and/or the security policy expected by the application function entity comprise/comprises an access stratum security policy and/or an application layer security policy.

23. A communication apparatus, comprising a unit or a module configured to perform the method according to any one of claims 1 to 12.

24. A communication apparatus, comprising a unit or a module configured to perform the method according to any one of claims 13 to 22.

25. A computer-readable storage medium, wherein the storage medium stores a computer program or instructions, and when the computer program or the instructions are executed by a computer, the method according to any one of claims 1 to 22 is implemented.

26. A computer program product, comprising computer program code, wherein when the computer program code is run on a computer, the method according to any one of claims 1 to 22 is implemented.

27. A communication system, comprising the communication apparatus according to claim 23 and the communication apparatus according to claim 24.
